(19) Europäisches Patentamt
European Patent Office
Office européen des brevets

(11) **EP 2 518 484 B1**

(12) **EUROPEAN PATENT SPECIFICATION**

(45) Date of publication and mention
of the grant of the patent:
**12.02.2020 Bulletin 2020/07**

(51) Int Cl.:
***G01N 27/447*** *(2006.01)*

(21) Application number: **10839389.3**

(22) Date of filing: **21.12.2010**

(86) International application number:
**PCT/JP2010/072989**

(87) International publication number:
**WO 2011/078159 (30.06.2011 Gazette 2011/26)**

(54) **INSTRUMENT FOR ELECTROPHORESIS AND ELECTROPHORESIS APPARATUS**

ELEKTROPHORESEINSTRUMENT UND ELEKTROPHORESEVORRICHTUNG

INSTRUMENT POUR L'ÉLECTROPHORÈSE ET APPAREIL D'ÉLECTROPHORÈSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2009 JP 2009292323**

(43) Date of publication of application:
**31.10.2012 Bulletin 2012/44**

(73) Proprietors:
• **Toppan Printing Co., Ltd.**
**Tokyo 110-8560 (JP)**
• **MERCK LTD.**
**Tokyo, 153-8927 (JP)**

(72) Inventors:
• **KINOSHITA Hideki**
**Osaka 545-8522 (JP)**
• **MARUO Yuji**
**Osaka 545-8522 (JP)**
• **UNUMA Yutaka**
**Osaka 545-8522 (JP)**
• **HIRATSUKA Atsunori**
**Tokyo 100-8921 (JP)**
• **SAKAIRI Koji**
**Tokyo 110-8560 (JP)**
• **AKUTSU Satonari**
**Tokyo 110-8560 (JP)**

(74) Representative: **Treeby, Philip David William et al
Maucher Jenkins
26 Caxton Street
London SW1H 0RJ (GB)**

(56) References cited:
**EP-A1- 2 315 014 WO-A1-2010/008008
JP-A- 2005 090 976 JP-A- 2007 064 848
US-A- 5 284 565 US-A1- 2007 045 118
US-B1- 6 328 870**

**Description**

TECHNICAL FIELD

The present invention relates to an instrument for electrophoresis and an electrophoresis apparatus including the instrument.

BACKGROUND ART

In the post-genomic era, proteomic research is briskly carried out, and particularly, large-scale analyses focusing on the structures and functions of proteins are being conducted. Herein, the term "proteomic" means entire proteins that are translated and produced in specific cells, body parts, and organs.

As a technique for large-scale analysis of proteins, two-dimensional electrophoresis of proteins is widely used. Since every protein has its own charge and molecular weight, by fractionating a mixed protein solution contained in the body based on molecular weight or charge, it is possible to separate various types of proteins. Particularly, even among the same types of proteins having almost identical molecular weights, there are proteins carrying different charges due to post-translational modification. Therefore, charge-based separation is useful. Two-dimensional electrophoresis also has the advantage that more proteins can be separated with high resolution. In addition, two-dimensional electrophoresis can be performed in the presence or absence of a denaturant of a sample to be used, and can separate hundreds to thousands of types of proteins at a time.

Two-dimensional electrophoresis is composed of two electrophoresis steps including isoelectric focusing electrophoresis that separates proteins based on charge and slab gel electrophoresis that separates proteins based on molecular weight. As the slab gel electrophoresis, electrophoresis (hereinbelow, referred to as "SDS-PAGE") that uses a polyacrylamide gel in the presence of sodium dodecyl sulfate and the like are used.

Specifically, in two-dimensional electrophoresis, a protein sample is introduced to a first-dimension gel to perform isoelectric focusing electrophoresis, the first-dimension gel is then taken out and connected to a second-dimension gel, and second-dimensional electrophoresis is carried out based on molecular weight, whereby proteins are separated. Generally, the first-dimension gel for performing isoelectric focusing electrophoresis has a long, slender, and thin shape. Therefore, it is difficult to discriminate the front from the back of the gel and the direction of pH gradient, and the gel is easily kinked or twisted. Moreover, it is difficult to diminish the gap between the first- and second-dimension gels when the first-dimension gel is connected to the second-dimension gel. If the gap between the first- and second-dimension gels is enlarged, not only the resolution of the electrophoresis results deteriorates, but also the reproducibility tends to deteriorate. Furthermore, the handleability of the first-dimension gel also deteriorates, and it is difficult to improve positional accuracy accurately when the first-dimension gel is transferred and connected to the second-dimension gel.

As described above, being an excellent technique, two-dimensional electrophoresis is carried out by complicated steps, and it is difficult to obtain quantitative data with excellent reproducibility. For these reasons, the reproducibility and quantitativity have depended on the proficiency of the operator. Particularly, when SDS-PAGE is used for the second dimensional separation, in order to develop the protein in the first-dimension gel to the second dimension after the first dimensional electrophoresis ends, it is necessary to perform an equilibration (making a SDS gel and reduction) treatment (chemical treatment) and an alkylation treatment. Such treatments necessary to be performed on the first-dimension gel also cause variations depending on operators.

In this respect, in order to improve contact performance between the first- and second-dimension gels, Patent Document 1 proposes a method of fixing the gap between the first- and second-dimension gels with agarose.

In addition, in order to prevent the first-dimension gel that is slender, long, and thin from being kinked or twisted, Patent Documents 2 and 3 propose a method of fixing the first-dimension gel to a supporter and connecting this gel to the second-dimension gel.

Prior Art Document

Patent Document

Patent Document 1: Japanese Unexamined Patent Application Publication No. Sho 58-53745;
Patent Document 2: Japanese Unexamined Utility Model (Registration) Application Publication No. Sho 62-115161;
Patent Document 3: Japanese Unexamined Patent Application Publication No. 2007-64848;

US 5,284,565; and

US 2007/045118.

DISCLOSURE OF INVENTION

Problem to be Solved by the Invention

However, even with the respect methods disclosed in Patent Documents 1 to 3, the resolution, reproducibility, and quantitativity of data obtained by two-dimensional electrophoresis are by no means high.

The present invention has been made in consideration of the above problems, and an object thereof is to provide an instrument for electrophoresis and an electrophoresis apparatus that can sufficiently enhance the resolution, reproducibility, and quantitativity of data obtained by two-dimensional electrophoresis.

Means to Solve the Problem

From electrophoresis simulation, the present inventors found that the connection position of gels in horizontal and vertical directions is important for improving the resolution, reproducibility, and quantitativity of data of two-dimensional electrophoresis.

Hereinbelow, specific simulation results will be described.

[Calculation Example 1]

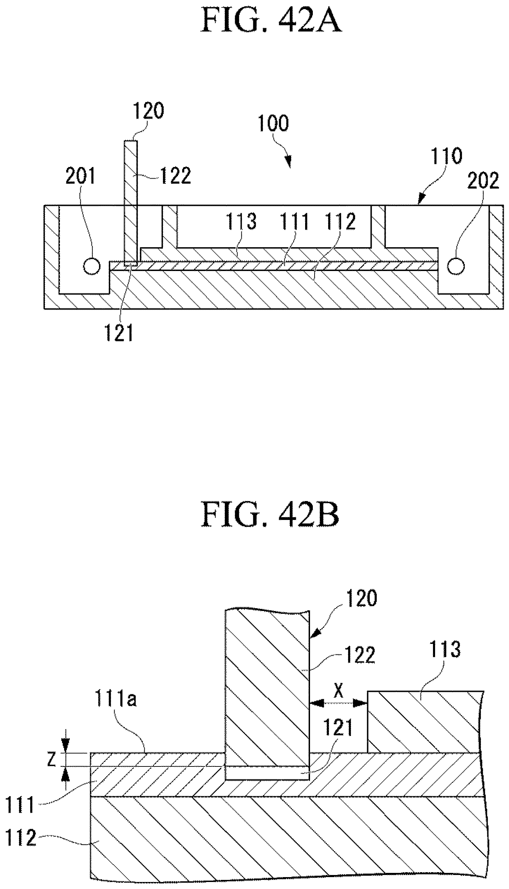

In order to investigate a preferable connection position of a sample-containing medium 121 in a sample-separating medium 111, an electrophoresis apparatus 100 shown in FIGS. 42A and 42B was used as a model, and electrophoresis simulation of a sample was performed using a calculator. FIG. 42A is a cross-sectional view of schematic constitution of an instrument for electrophoresis 100, and FIG. 42B is an enlarged cross-sectional top view of a main portion of the instrument for electrophoresis 100.

As shown in FIGS. 42A and 42B, in the instrument for electrophoresis 100, the sample-separating medium 111 having a thickness of 1 mm is disposed between a cathode 201 and an anode 202. The sample-separating medium 111 is interposed between a loading portion 112 having a thickness of 2 mm and a protecting portion 113 in a sample-separating portion 110. The portion of the protecting portion 113 close to the cathode 201 is short, and the sample-separating medium 111 is exposed 10 mm toward the cathode 201. The sample-containing medium 121 that is supported by a supporting portion 122 of a sample-transporting portion 120 and has a thickness of 0.4 mm and a width of 1.2 mm is pressed on and connected to the exposed connection portion 111a.

The distance formed when the sample-containing medium 121 is connected to the connection portion 111a and corresponding to a distance between the end of the protecting portion 113 and the sample-containing medium 121 is taken as X, and a distance between the bottom surface of the protecting portion 113 and the top surface of the sample-separating medium 111 is taken as Z.

For the simulation, the dielectric constant of the sample-containing medium 121 and the sample-separating medium 111 was set to be the same as water. As a sample (charged particles), modeled lysozyme was used. The mobility of the modeled lysozyme was presumed from the actual measurement value of SDS-PAGE of the lysozyme. The modeled lysozyme was moved to the sample-separating medium 111 from a position that was placed 0.02 mm inward of the gel from the total 8 sites including the respective vertices and midpoints of sides of the sample-containing medium 121.

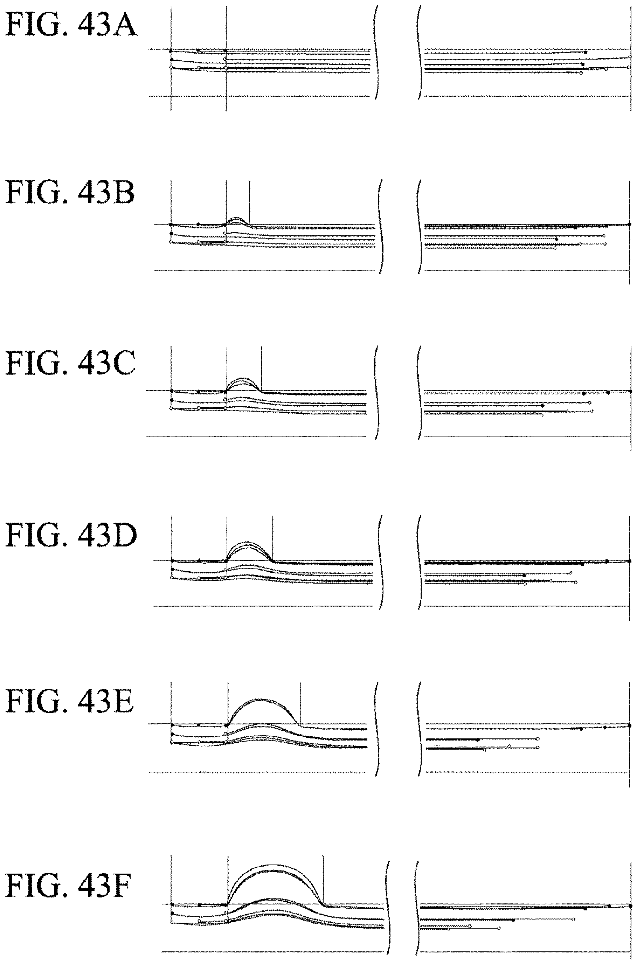

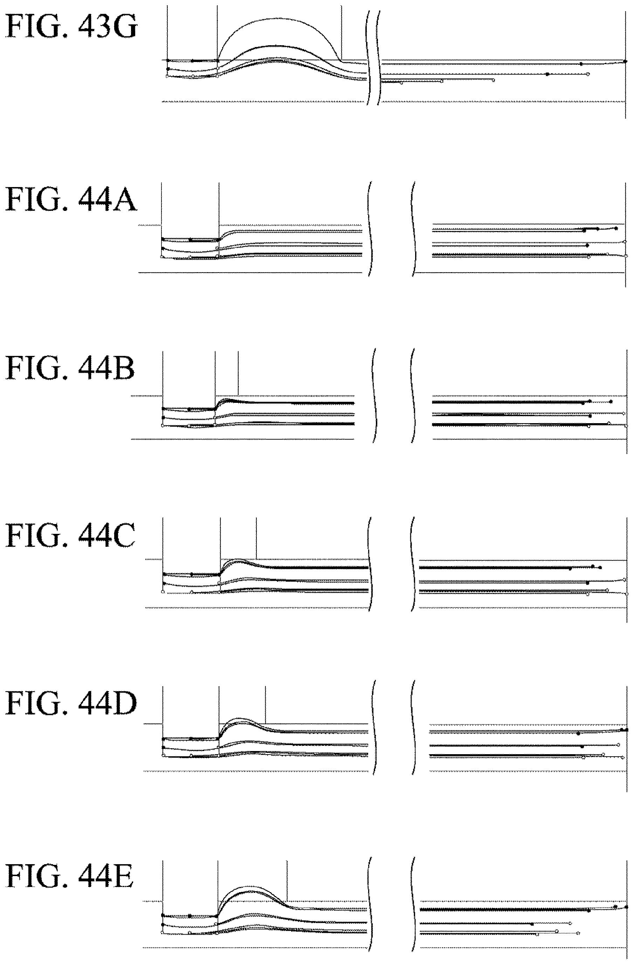

FIGS. 43A to 43G are views showing simulation results of the movement locus of the modeled lysozyme, which are results obtained when the distance Z is set to 0 mm and the distance X is varied in a range of from 0 mm to 3 mm. FIGS. 43A to 43G show simulation results of cases #1 to #7 respectively. The left side of each of FIGS. 43A to 43G is a cathode side where the sample-containing medium 121 is connected. The same description is applied to FIGS 44A to 44G, FIGS 45A to 45G, and FIGS 46A to 46D.

As shown in the case #1 (FIG. 43A), when the distance X was 0 mm, the modeled lysozyme moved inside the sample-separating medium 111 and was not diffused to a buffer solution outside the sample-separating medium 111. In addition, in FIGS 43A to 43G, the modeled lysozyme came out of the center and the right side of the upper side of the sample-containing medium 121 collided with the bottom surface of the protecting portion 113.

As shown in the respective case #2 (FIG. 43B), #3 (FIG. 43C), #4 (FIG. 43D), #5 (FIG. 43E), or #6 (FIG. 43F), when the distance X was 0.5 mm, 0.75 mm, 1 mm, 1.5 mm, or 2 mm, the modeled lysozyme was diffused to the buffer solution outside the sample-separating medium 111. Moreover, the modeled lysozyme did not collide with the bottom surface of the protecting portion 113.

As shown in the case #7 (FIG. 43G), when the distance X was 3 mm, the modeled lysozyme was diffused to the buffer solution outside the sample-separating medium 111 and collided with the bottom surface of the protecting portion 113.

As described above, when the distance Z was 0 mm, the whole modeled lysozyme coming out of the sample-containing medium 121 moved inside the sample-separating medium 111 only when the distance X was 0 mm.

FIGS. 44A to 44G are views showing simulation results of the movement locus of the modeled lysozyme, which are results obtained when the distance Z is set to 0.3 mm and the distance X is varied in a range of from 0 mm to 3 mm. FIGS. 44A to 44G show simulation results of cases #8 to #14 respectively.

As shown in the case #8 (FIG. 44A), #9 (FIG. 44B), or #10 (FIG. 44C), when the distance X was 0 mm, 0.5 mm, or 0.75 mm, the modeled lysozyme was not diffused to the buffer solution outside the sample-separating medium 111. In addition, the modeled lysozyme did not collide with the bottom surface of the protecting portion 113.

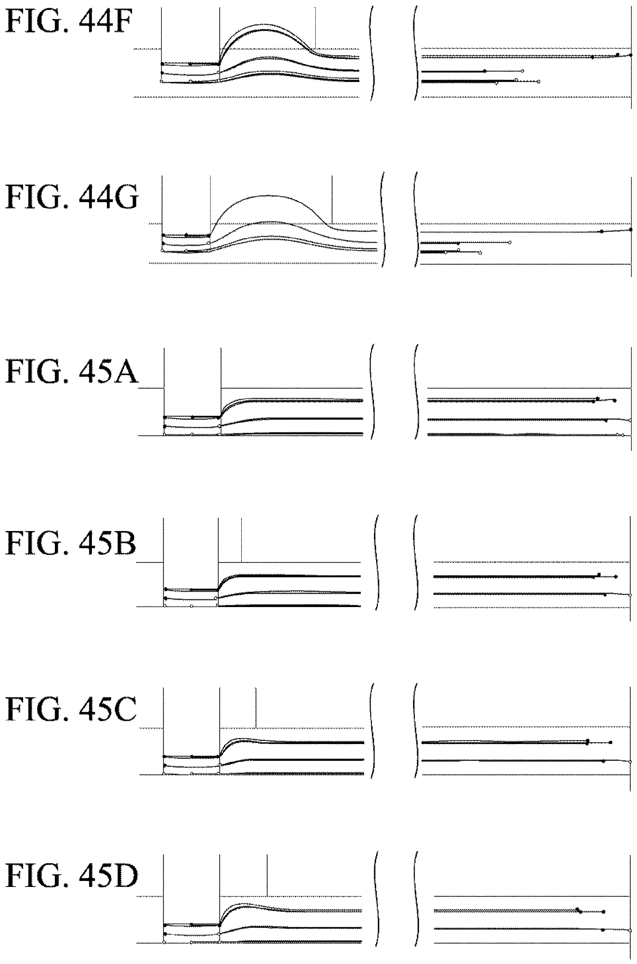

As shown in the case #11 (FIG. 44D), #12 (FIG. 44E), or #13 (FIG. 44F), when the distance X was 1 mm, 1.5 mm, or 2 mm, the modeled lysozyme was diffused to the buffer solution outside the sample-separating medium 111. In addition, the modeled lysozyme did not collide with the bottom of the protecting portion 113.

As shown in the case #14 (FIG. 44G), when the distance X was 3 mm, the modeled lysozyme was diffused to the buffer solution outside the sample-separating medium 111 and collided with the bottom surface of the protecting portion 113.

As described above, when the distance Z was 0.3 mm, the whole modeled lysozyme coming out of the sample-containing medium 121 moved inside the sample-separating medium 111 only when the distance X was 0.75 mm or less.

FIGS. 45A to 45G are views showing simulation results of the movement locus of the modeled lysozyme, which are results obtained when the distance Z is set to 0.6 mm and the distance X is varied in a range of from 0 mm to 3 mm. FIGS. 45A to 45G show simulation results of cases #15 to #21 respectively.

As shown in the case #15 (FIG. 45A), when the distance X was 0 mm, the modeled lysozyme moved inside the sample-separating medium 111 and was not diffused to the buffer solution outside the sample-separating medium 111. In addition, in FIGS. 45A to 45G, the modeled lysozyme coming out of the left side of the lower side of the sample-containing medium 121 collided with the bottom surface of the protecting portion 113.

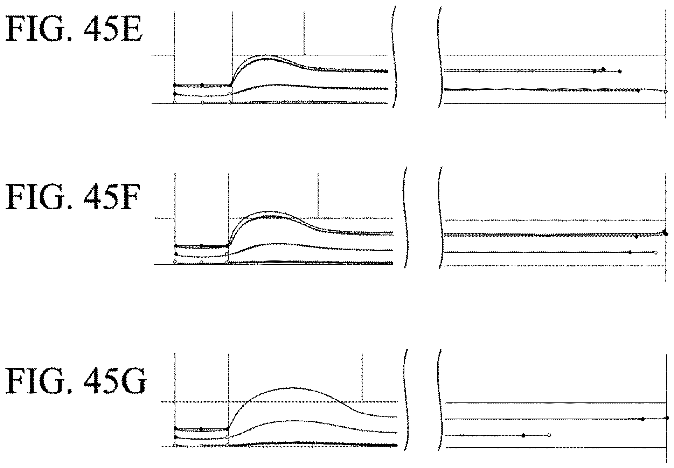

As shown in the case #16 (FIG. 45B), #17 (FIG. 45C), #18 (FIG. 45D), or #19 (FIG. 45E), when the distance X was 0.5 mm, 0.75 mm, 1 mm, or 1.5 mm, the modeled lysozyme moved inside the sample-separating medium 111 and was not diffused to the buffer solution outside the sample-separating medium 111. In addition, in FIG. 45E, three modeled lysozymes coming out of the lower side of the sample-containing medium 121 collided with the top surface of the loading portion 112.

As shown in the case #20 (FIG. 45F), when the distance X was 2 mm, the modeled lysozyme was diffused to the buffer solution outside the sample-separating medium 111. In addition, in FIG. 45F, three modeled lysozymes coming out of the lower side of the sample-containing medium 121 collided with the top surface of the loading portion 112.

As shown in the case #21 (FIG. 45G), when the distance X was 3 mm, the modeled lysozyme was diffused to the buffer solution outside the sample-separating medium 111. In addition, in Fig. 45G, the modeled lysozyme coming out of the center of the upper side of the sample-containing medium 121 collided with the bottom surface of the protecting portion 113, and three modeled lysozymes coming out of the lower side of the sample-containing medium 121 collided with the top surface of the loading portion 112.

As described above, when the distance Z was 0.6 mm, the whole modeled lysozyme coming out of the sample-containing medium 121 moved inside the sample-separating medium 111 only when the distance X was 1.5 mm or less.

The above results are summarized in Table 1. From the above simulation results and the like, it was confirmed that electrophoresis was performed excellently when the relationship of the following Formula (1) was satisfied.

$$Z \geq 0.4 \times X \quad \cdots \quad (1)$$

[Table 1]

| | | X (mm) | | | | | | |
|---|---|---|---|---|---|---|---|---|
| | | 0 | 0.5 | 0.75 | 1.0 | 1.5 | 2.0 | 3.0 |
| Z (mm) | 0 | #1 | #2 | #3 | #4 | #5 | #6 | #7 |
| | 0.3 | #8 | #9 | #10 | #11 | #12 | #13 | #14 |
| | 0.6 | #15 | #16 | # 17 | #18 | #19 | #20 | #21 |

[Calculation Example 2]

In order to investigate the influence of the thickness of the sample-separating medium 111 on the simulation in Calculation Example 1, simulation for the movement locus of the modeled lysozyme was performed by varying the thickness of the sample-separating medium 111 in the model used in Calculation Example 1.

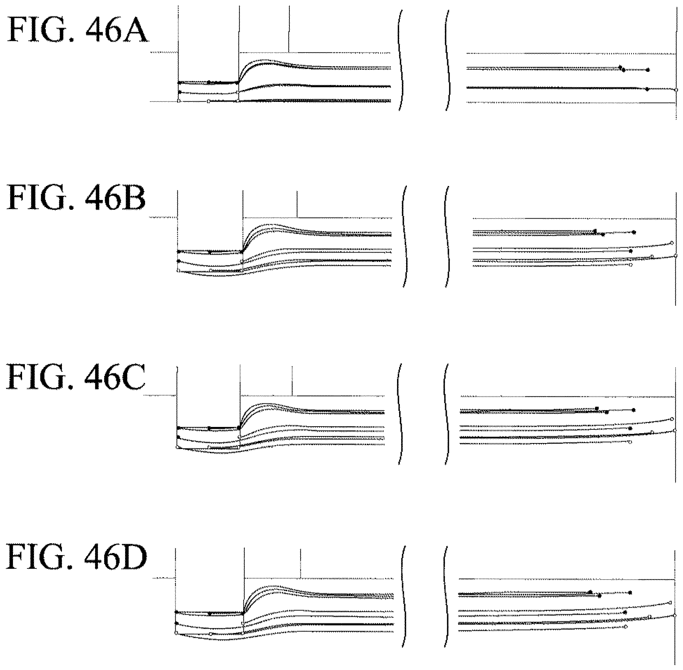

FIGS. 46A to 46D are views showing simulation results of the movement locus of the modeled lysozyme, which are results obtained when the distance X was set to 1 mm, the distance Z was set to 0.6 mm, and the thickness of the sample-separating medium 111 was varied in a range of from 1 mm to 9 mm. FIGS. 46A to 46D show the simulation results of cases #31 to #34 respectively. The cases #31 (FIG. 46A) to #34 (FIG. 46D) show results obtained when the thickness of the sample-separating medium 111 was set to 1 mm, 3 mm, 6 mm, or 9 mm respectively.

As shown in the cases #31 (FIG. 46A) to #34 (FIG. 46D), the modeled lysozyme was not diffused to the buffer solution outside the sample-separating medium 111 regardless of the thickness of the sample-separating medium 111. In the case #31 (FIG. 46A), three modeled lysozymes coming out of the lower side of the sample-containing medium 121 in FIG. 46A collided with the top surface of the loading portion 112. However, in the cases #32 (FIG. 46B) to #34 (FIG. 46D), the modeled lysozyme did not collide with the top surface of the loading portion 112 and with the bottom surface of the protecting portion 113 since the sample-containing medium 121 was thick.

In the cases #32 (FIG. 46B) to #34 (FIG. 46D) where the sample-separating medium 111 was thick, the locus of the modeled lysozyme just coming out of the sample-containing medium 121 makes a bigger curve downwardly, compared to the case #31 (FIG. 46A). The difference in the thickness of the sample-containing medium 121 is not considered to be the reason. In other words, the line of electric force is blocked with the supporting portion 122 and bent downward near the sample-containing medium 121. In the case #31 (FIG. 46A), the loading portion 112 is positioned immediately below the sample-containing medium 121, so the line of electric force is suppressed from being bent downward. However, in the cases #32 (FIG. 46B) to #34 (FIG. 46D), the sample-containing medium 121 is thick, so the line of electric force is not inhibited from being bent downward. Consequently, it is considered that the locus of the modeled lysozyme is bent downward immediately after the lysozyme comes out of the sample-containing medium 121.

It is considered that the locus of electrophoresis of the modeled lysozyme does not vary with the thickness of the sample-separating medium 111 for the reasons described above.

[Test Example 1]

Tests for verifying the above results were performed. Electrophoresis was actually carried out using the instrument for electrophoresis 100 shown in FIG. 42A by varying parameters of the distance X and distance Z in Formula (1), and the sample separated by the electrophoresis was detected by fluorescence. As the sample-containing medium, a medium obtained by performing one-dimensional electrophoresis on a solubilized protein from rat liver in an IPG (Immobilized pH gradient) gel was used.

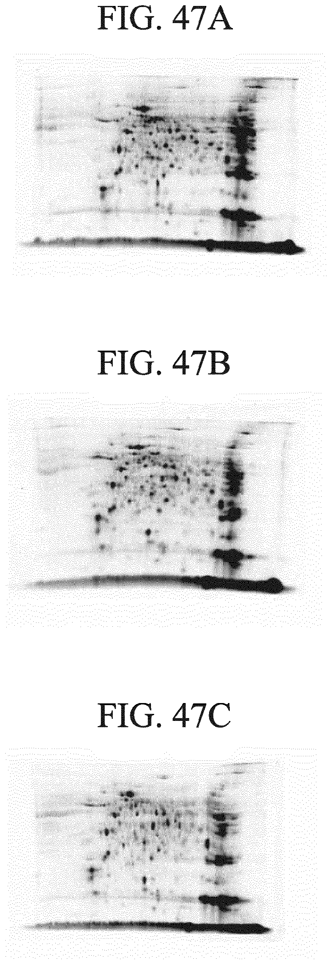

FIGS. 47A to 47E are views that are obtained when the distance Z is set to 0.3 mm and the distance X is varied in a range of from 0 mm to 2 mm. These views show fluorescent spots obtained after the electrophoresis. FIGS. 47A to 47E show fluorescent spots in the cases #8, #9, #10, #12, and #13 respectively. As shown in FIGS. 47A to 47E, overall protein intensity tended to decrease as the distance X increased. Moreover, when the distance X and the distance Z satisfied the relationship of the Formula (1), that is, when the distance X was 0 mm or 0.5 mm, the spots were not stretched in the longitudinal direction, as shown in the case #8 (FIG. 47A) or #9 (FIG. 47B) respectively. On the other hand, when the distance X was 1 mm, the spots were slightly stretched as shown in the case #10 (FIG. 47C).

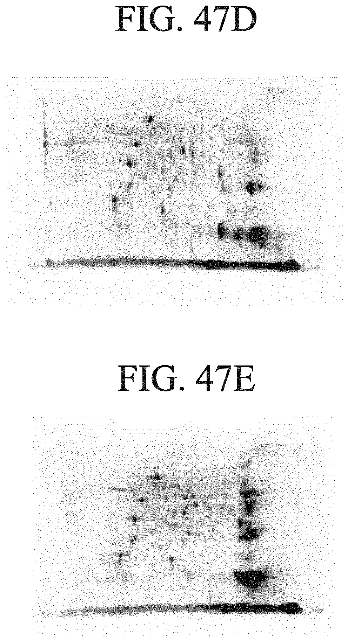

Meanwhile, when the distance X and the distance Z did not satisfy the Formula (1), that is, when the distance X was 1.5 mm or 2 mm, the spots smudged as shown in the case #12 (FIG. 47D) or #13 (FIG. 47E) respectively.

[Test Example 2]

In addition, comparative experiments were performed on a case where the distance X was in a range from the end of the protecting portion 113 to the end of the sample-separating medium 111 and on a case where the sample-containing medium 121 passed the end of the sample-separating medium 111 and contact the end surface of the sample-separating medium. Even in this experiment, the instrument for electrophoresis 100 (FIG. 42A) was used, and a medium obtained by performing one-dimensional electrophoresis on a solubilized protein from rat liver in an IPG gel was used as the sample-containing medium.

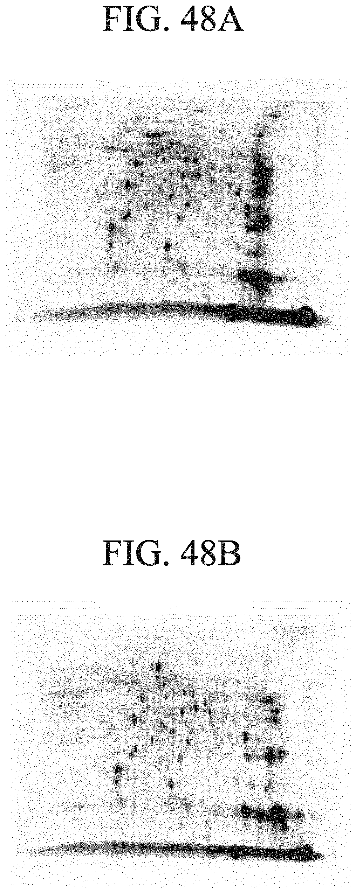

When the second-dimensional electrophoresis was performed in a range from the end of the protecting portion 113 to the end of the sample-separating medium 111 by pressing the sample-containing medium 121 on the connection portion 111a in the vertical direction so as to connect the sample-containing medium 121 to the connection portion 111a, resolution was excellent as shown in FIG. 48A.

On the other hand, when the lateral surface of the sample-containing medium 121 is pressed on the end surface of the sample-separating medium 111 in the horizontal direction such that the sample-containing medium 121 is connected to the sample-separating medium 111, resolution was low as shown in FIG. 48B.

As described above, the present inventors found that high resolution was obtained when the relationship of Formula (1) was satisfied. Based on this knowledge, the present inventors investigated specific means for positioning the sample-containing medium to easily satisfy the Formula (1). As a result, the present inventors invented the following instrument for electrophoresis and electrophoresis apparatus.

[1] According to the present invention there is provided an instrument for electrophoresis comprising: a sample-separating portion including a loading portion on which a sample-separating medium that separates a sample has been loaded, side wall portions provided to a lateral surface of the loading portion, and a protecting portion that is disposed on the sample-separating medium such that a portion of the sample-separating medium is exposed; a sample-transporting portion that transports the sample-containing medium to the sample-separating portion including a supporting portion to which the sample-containing medium containing the sample adheres; and a positioning portion that is provided to the loading portion, the protecting portion, the side wall portion and/or the sample-transporting portion and used for connecting the sample-containing medium to a predetermined position of the exposed portion of the sample-separating medium, wherein the positioning portion is configured to determine the predetermined position such that a relationship is satisfied, the relationship being $Z \geq 0.4 \times X$, and wherein the X is first distance between the end of the protecting portion and the sample-containing medium, and the Z is second distance between the bottom surface of the protecting portion and the top surface of the sample-containing medium.

[2] The instrument for electrophoresis according to the above-described [1], wherein the positioning portion is constituted with a fitting convexity which is provided to the sample-transporting portion and a fitting concavity which is provided to the protecting portion of the sample-separating portion and into which the fitting convexity can fit.

[3] The instrument for electrophoresis according to the above-described [1], wherein the positioning portion is constituted with a fitting convexity which is provided to the sample-separating portion and a fitting concavity which is provided to the sample-transporting portion and into which the fitting convexity can fit.

[4] The instrument for electrophoresis according to the above-described [1], wherein the positioning portion is a movement-restricting portion which is a portion of the protecting portion of the sample-separating portion and on which a bottom surface of the supporting portion of the sample-transporting portion abuts.

[5] The instrument for electrophoresis according to the above-described [1], wherein the positioning portion is a movement-restricting portion which is provided to the sample-separating portion and on which a bottom surface of the supporting portion of the sample-transporting portion abuts.

[6] The instrument for electrophoresis according to the above-described [5], wherein a guiding portion provided with a groove in which a portion of the sample-transporting portion is inserted is provided to the movement-restricting portion.

[7] The instrument for electrophoresis according to the above-described [1], wherein the positioning portion includes a guiding portion which is provided to the sample-separating portion and in which a groove is formed in a direction orthogonal to the surface of the sample-separating medium and a convexity which is provided to the sample-transporting portion and inserted into the groove, and the groove of the guiding portion has a terminal on which the convexity abuts so as to restrict the movement of the sample-transporting portion.

[8] The instrument for electrophoresis according to the above-described [1], wherein an opening portion into which the sample-containing medium can be inserted is formed in the protecting portion.

[9] The instrument for electrophoresis according to the above-described [1], wherein a medium which has been undergone a first-dimensional electrophoresis of the sample is adhered to the supporting portion as the sample-containing medium, and the sample-separating portion performs a second-dimensional electrophoresis of the sample by using the sample-separating medium

[10] The electrophoresis apparatus according to the above-described [1], wherein elastic modulus of the sample-containing medium is higher than that of the sample-separating medium.

Effect of the Invention

With the instrument for electrophoresis of the present invention, it is possible to accurately and simply connect a sample-containing medium that contains a sample to a predetermined position of a sample-separating medium that separates a sample. Accordingly, it is possible to sufficiently enhance the resolution, reproducibility, and quantitativity of data obtained by two-dimensional electrophoresis.

According to the electrophoresis apparatus of the present invention, it is possible to sufficiently enhance the resolution, reproducibility, and quantitativity of the obtained data.

In order that the present arrangement be more readily understood, specific embodiments thereof will now be described.

BRIEF DESCRIPTION OF THE DRAWINGS

FIG. 1 is a cross-sectional view showing a schematic constitution of an instrument for electrophoresis according to a first embodiment of the present invention.

FIG. 2 is an enlarged cross-sectional view obtained when a connection portion constituting the instrument for electrophoresis of the first embodiment and the vicinity of the connection portion are cut in parallel with a second side wall portion.

FIG. 3 is a perspective view showing a sample-separating portion constituting the instrument for electrophoresis of the first embodiment.

FIG. 4 is a top view showing the sample-separating portion constituting the instrument for electrophoresis of the first embodiment.

FIG. 5 is an enlarged cross-sectional view showing a state where a sample-transporting portion is connected to the sample-separating portion in the instrument for electrophoresis of the first embodiment, which is a view obtained when the above portions are cut in parallel with the second side wall portion.

FIG. 6 is an enlarged cross-sectional view showing a state where a coating portion is provided to a sample-containing medium in the instrument for electrophoresis of the first embodiment.

FIG. 7 is a top view showing a schematic constitution of an instrument for electrophoresis of a second embodiment of the present invention.

FIG. 8 is a cross-sectional view taken along the line I-I' of FIG. 7.

FIG. 9 is a cross-sectional view taken along the line II-II' of FIG. 7.

FIG. 10 is an enlarged cross-sectional view showing how a sample-separating medium is formed in the instrument for electrophoresis of the second embodiment.

FIG. 11 is an enlarged cross-sectional view showing a state where a sample-transporting portion is connected to the sample-separating portion in the instrument for electrophoresis of the second embodiment, which is a view obtained when the above portions are cut in parallel with a second side wall portion.

FIG. 12 is an enlarged cross-sectional view showing a state where the sample-transporting portion is connected to the sample-separating portion in the instrument for electrophoresis of the second embodiment, which is a view obtained when the above portions are cut in parallel with a first side wall portion.

FIG. 13 is an enlarged cross-sectional view showing a modified example of the instrument for electrophoresis of the second embodiment.

FIG. 14 is an enlarged cross-sectional view showing another modified example of the instrument for electrophoresis of the second embodiment.

FIG. 15 is an enlarged cross-sectional view obtained when a connection portion of an instrument for electrophoresis according to a third embodiment of the present invention and the vicinity of the connection portion are cut in parallel with a first side wall portion.

FIG. 16 is an enlarged cross-sectional view showing a state where a sample-transporting portion is connected to a sample-separating portion of the instrument for electrophoresis of the third embodiment, which is a view obtained when the above portions are cut in parallel with a second side wall portion.

FIG. 17 is an enlarged cross-sectional view showing a modified example of the instrument for electrophoresis of the third embodiment.

FIG. 18 is an enlarged cross-sectional view showing another modified example of the instrument for electrophoresis of the third embodiment.

FIG. 19 is an enlarged cross-sectional view showing the other modified example of the instrument for electrophoresis of the third embodiment.

FIG. 20 is a top view showing a schematic constitution of an instrument for electrophoresis according to a fourth embodiment of the present invention.

FIG. 21 is a cross-sectional view taken along the line III-III' of FIG. 20.

FIG. 22 is a cross-sectional view taken along the line IV-IV' of FIG. 20.

FIG. 23 is an enlarged cross-sectional view showing a state where a sample-transporting portion is connected to a sample-separating portion in the instrument for electrophoresis of the fourth embodiment, which is a view obtained when the above portions are cut in parallel with a second side wall portion.

FIG. 24 is an enlarged cross-sectional view showing a state where the sample-transporting portion is connected to the sample-separating portion in the instrument for electrophoresis of the fourth embodiment, which is a view obtained when the above portions are cut in parallel with a first side wall portion.

FIG. 25 is a top view showing a schematic constitution of an instrument for electrophoresis according to a fifth embodiment of the present invention.

FIG. 26 is a cross-sectional view taken along the line V-V' of FIG. 25.

FIG. 27 is a cross-sectional view taken along the line VI-VI' of FIG. 25.

FIG. 28 is an enlarged cross-sectional view showing a state where a sample-transporting portion is connected to a sample-separating portion in the instrument for electrophoresis of the fifth embodiment, which is a view obtained when the above portions are cut in parallel with a second side wall portion.

FIG. 29 is an enlarged cross-sectional view showing a state where the sample-transporting portion is connected to the sample-separating portion in the instrument for electrophoresis of the fifth embodiment, which is a view obtained when the above portions are cut in parallel with a first side wall portion.

FIG. 30 is a top view showing a schematic constitution of an instrument for electrophoresis according to a sixth embodiment of the present invention.

FIG. 31 is a cross-sectional view taken along the line VII-VII' of FIG. 30.

FIG. 32 is a cross-sectional view taken along the line VIII-VIII' of FIG. 30.

FIG. 33 is an enlarged cross-sectional view showing a state where a sample-transporting portion is connected to a sample-separating portion in the instrument for electrophoresis of the sixth embodiment, which is a view obtained when the above portions are cut in parallel with a second side wall portion.

FIG. 34 is an enlarged cross-sectional view showing a state where a sample-transporting portion is connected to a sample-separating portion in the instrument for electrophoresis of the sixth embodiment, which is a view obtained when the above portions are cut in parallel with a first side wall portion.

FIG. 35 is a top view showing a schematic constitution of an instrument for electrophoresis according to a seventh embodiment of the present invention.

FIG. 36 is a cross-sectional view taken along the line IX-IX' of FIG. 35.

FIG. 37 is a cross-sectional view taken along the line X-X' of FIG. 35.

FIG. 38 is an enlarged cross-sectional view showing a state where a sample-transporting portion is connected to a sample-separating portion in the instrument for electrophoresis of the seventh embodiment, which is a view obtained when the above portions are cut in parallel with a second side wall portion.

FIG. 39 is an enlarged cross-sectional view showing a state where the sample-transporting portion is connected to the sample-separating portion in the instrument for electrophoresis of the seventh embodiment, which is a view obtained when the above portions are cut in parallel with a first side wall portion.

FIG. 40 is an enlarged cross-sectional view showing a modified example of the sample-transporting portion constituting the instrument for electrophoresis of the seventh embodiment.

FIG. 41 is an enlarged cross-sectional view showing another modified example of the sample-transporting portion constituting the instrument for electrophoresis of the seventh embodiment.

FIG. 42A is a cross-sectional view showing a schematic constitution of the instrument for electrophoresis that shows an example of the electrophoresis apparatus of the present invention.

FIG. 42B is an enlarged cross-sectional top view showing the main portion of the instrument for electrophoresis of FIG. 42A.

FIG. 43A is a view showing simulation results of the case #1 in Calculation Example 1.

FIG. 43B is a view showing simulation results of the case #2 in Calculation Example 1.

FIG. 43C is a view showing simulation results of the case #3 in Calculation Example 1.

FIG. 43D is a view showing simulation results of the case #4 in Calculation Example 1.

FIG. 43E is a view showing simulation results of the case #5 in Calculation Example 1.

FIG. 43F is a view showing simulation results of the case #6 in Calculation Example 1.

FIG. 43G is a view showing simulation results of a case #7 in Calculation Example 1.

FIG. 44A is a view showing simulation results of the case #8 in Calculation Example 1.

FIG. 44B is a view showing simulation results of the case #9 in Calculation Example 1.

FIG. 44C is a view showing simulation results of the case #10 in Calculation Example 1.

FIG. 44D is a view showing simulation results of the case #11 in Calculation Example 1.

FIG. 44E is a view showing simulation results of the case #12 in Calculation Example 1.

FIG. 44F is a view showing simulation results of the case #13 in Calculation Example 1.

FIG. 44G is a view showing simulation results of the case #14 in Calculation Example 1.

FIG. 45A is a view showing simulation results of the case #15 in Calculation Example 1.

FIG. 45B is a view showing simulation results of the case #16 in Calculation Example 1.

FIG. 45C is a view showing simulation results of the case #17 in Calculation Example 1.

FIG. 45D is a view showing simulation results of the case #18 in Calculation Example 1.
FIG. 45E is a view showing simulation results of the case #19 in Calculation Example 1.
FIG. 45F is a view showing simulation results of the case #20 in Calculation Example 1.
FIG. 45G is a view showing simulation results of the case #21 in Calculation Example 1.
FIG. 46A is a view showing simulation results of the case #31 in Calculation Example 2.
FIG. 46B is a view showing simulation results of the case #32 in Calculation Example 2.
FIG. 46C is a view showing simulation results of the case #33 in Calculation Example 2.
FIG. 46D is a view showing simulation results of the case #34 in Calculation Example 2.
FIG. 47A is a view showing electrophoresis results of the case #8 in Test Example 1.
FIG. 47B is a view showing electrophoresis results of the case #9 in Test Example 1.
FIG. 47C is a view showing electrophoresis results of the case #10 in Test Example 1.
FIG. 47D is a view showing electrophoresis results of the case #12 in Test Example 1.
FIG. 47E is a view showing electrophoresis results of the case #13 in Test Example 1.
FIG. 48A is a view showing electrophoresis results in Test Example 2.
FIG. 48B is a view showing other electrophoresis results in Test Example 2.

BEST MODE FOR CARRYING OUT THE INVENTION

<Instrument for Electrophoresis>

(First Embodiment)

A first embodiment of the instrument for electrophoresis of the present invention will be described.

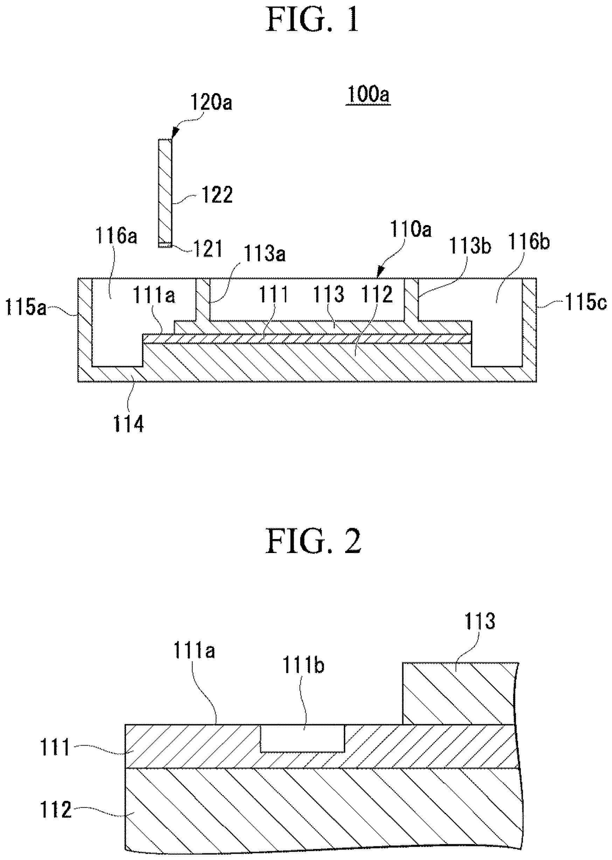

FIG. 1 is a cross-sectional view showing a schematic constitution of an instrument for electrophoresis 100a of the present embodiment, and FIG. 2 is an enlarged cross-sectional view showing a portion of the instrument.
The instrument for electrophoresis 100a of the present embodiment is used for the second-dimensional electrophoresis of two-dimensional electrophoresis apparatus. The instrument for electrophoresis 100a includes a sample-separating portion 110a and a sample-transporting portion 120a.
The sample-separating portion 110a separates a sample having undergone the first-dimensional electrophoresis.
The sample-transporting portion 120a transports the sample-containing medium 121 that contains the above sample to a sample-separating portion 110a.

[Sample-Separating Portion]

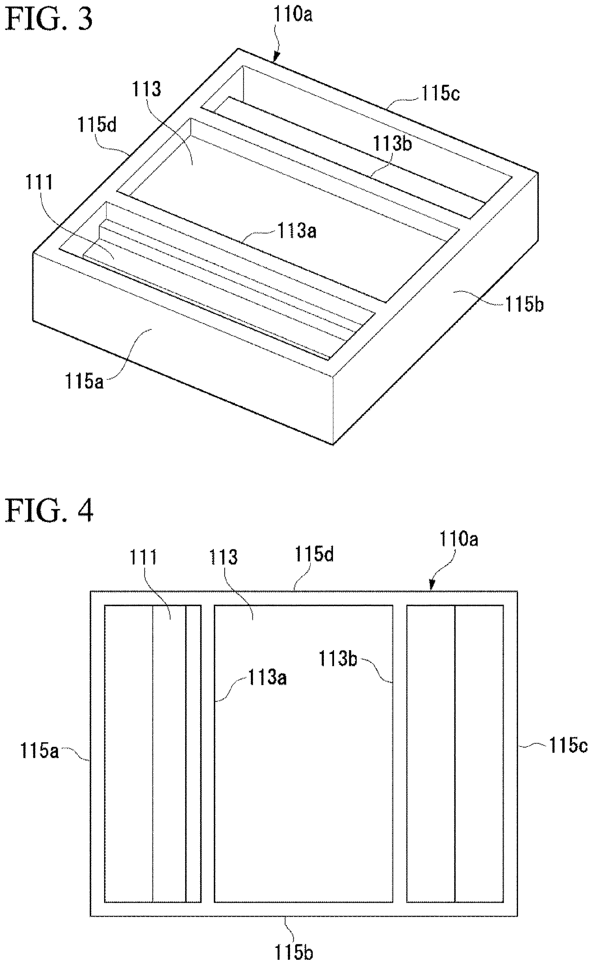

FIGS. 3 and 4 show the sample-separating portion 110a of the present embodiment. FIG. 3 is a perspective view showing a schematic constitution of the instrument for electrophoresis 100a of the present embodiment. FIG. 4 is a top view showing a schematic constitution of the instrument for electrophoresis 100a of the present embodiment.
The sample-separating portion 110a of the present embodiment includes a sample-separating medium 111, a loading portion 112, a protecting portion 113, a bottom portion 114, and side wall portions (a first side wall portion 115a, a second side wall portion 115b, a third side wall portion 115c, and a fourth side wall portion 115d).
The sample-separating medium 111 has a rectangular slab shape that separates a sample.
The loading portion 112 has the shape of a table on which the sample-separating medium 111 is loaded.
The protecting portion 113 is disposed on the sample-separating medium 111 in parallel with the loading portion 112.
The loading portion 112 is provided to the bottom portion 114.
The side wall portions (the first side wall portion 115a, the second side wall portion 115b, the third side wall portion 115c, and the fourth side wall portion 115d) stand on the periphery of the bottom portion 114.
The top surface of the loading portion 112 and the top and bottom surfaces of the protecting portion 113 form horizontal planes.
On the top surface of the protecting portion 113, near the end close to the first side wall portion 115a and near the end close to the third side wall portion 115c, weir portions (a first weir portion 113a and a second weir portion 113b) stand.
The sample-separating medium 111 is stored by being interposed between the loading portion 112 and the protecting portion 113.
Here, the area of the protecting portion 113 is smaller than that of the loading portion 112 such that the end of the sample-separating medium 111 close to the first side wall portion 115a is exposed. The exposed portion of the sample-separating medium 111 is a connection portion 111a to which the sample-containing medium 121 of the sample-transporting portion 120a is connected.

The sample-containing medium 121 is connected to the connection portion 111a, and a groove 111b (a positioning portion) into which the sample-containing medium 121 of the sample-transporting portion 120a can fit is formed in parallel with the first side wall portion 115a. This groove 111b preferably has a shape that is slightly smaller than the sample-containing medium 121.

In the sample-separating portion 110a, the portion surrounded by the first side wall portion 115a, the second side wall portion 115b, the first weir portion 113a, and the fourth side wall portion 115d becomes a tank (a first buffer solution tank 116a) filled with a buffer solution. In addition, the portion surrounded by the second weir portion 113b, the second side wall portion 115b, the third side wall portion 115c, and the fourth side wall portion 115d becomes a tank (a second buffer solution tank 116b) filled with a buffer solution.

The material of the sample-separating medium 111 may be a medium that is generally used for electrophoresis. For example, it is possible to use a gel that is gelated by a gelation agent selected from a group consisting of polyacrylamide, agarose, agar, and starch.

As the material of the loading portion 112 and the protecting portion 113, for example, insulators such as an acrylic resin, polycarbonate, polystyrene, polyethylene terephthalate, and glass are used.

The loading portion 112 is adhered to the protecting portion 113 via a spacer (not shown in the drawing), and between these portions, a gap for storing the sample-separating medium 111 is formed. In view of preventing an adhesive from being diffused to the air, it is preferable to use ultrasonic welding to cause the loading portion 112 to be adhered to the protecting portion 113 via a spacer. However, known adhesives may be used for the adhesion.

[Sample-Transporting Portion]

The sample-transporting portion 120a includes a supporting portion 122 having a bottom to which the sample-containing medium 121 containing a sample having undergone the first-dimensional electrophoresis has adhered.

The supporting portion 122 of the sample-transporting portion 120a is gripped with a hand or a movable arm so as to be moved, whereby the sample-containing medium 121 is transported to the connection portion 111a.

As the material of the sample-containing medium 121, the same material as that of the sample-separating medium 111 is used. As the material of the supporting portion 122, the same material as that of the loading portion 112 and the protecting portion 113 is used.

Here, the elastic modulus of the sample-containing medium 121 is preferably higher than that of the sample-separating medium 111. If the elastic modulus of the sample-containing medium 121 is higher than that of the sample-separating medium 111, it is possible to easily maintain the shape of the sample-containing medium 121 when the sample-containing medium 121 is connected to the sample-separating medium 111 in the section "How to Use" described later. Consequently, the accuracy of analysis performed by the second-dimensional electrophoresis is further improved.

As methods of adjusting the elastic modulus of the sample-separating medium 111 and the sample-containing medium 121, a method of varying the type of the gelation agent used for the sample-separating medium 111 and the sample-containing medium 121, and a method of varying the amount of the used gelation agent contained in the sample-separating medium 111 and the sample-containing medium 121 are exemplified. Among these, the method of varying the amount of the contained gelation agent is preferable. Specifically, it is preferable to set the amount of the gelation agent contained in the sample-containing medium 121 to be larger than that of the gelation agent contained in the sample-separating medium 111.

[How to Use]

The instrument for electrophoresis 100a of the present embodiment is used in the following manner.

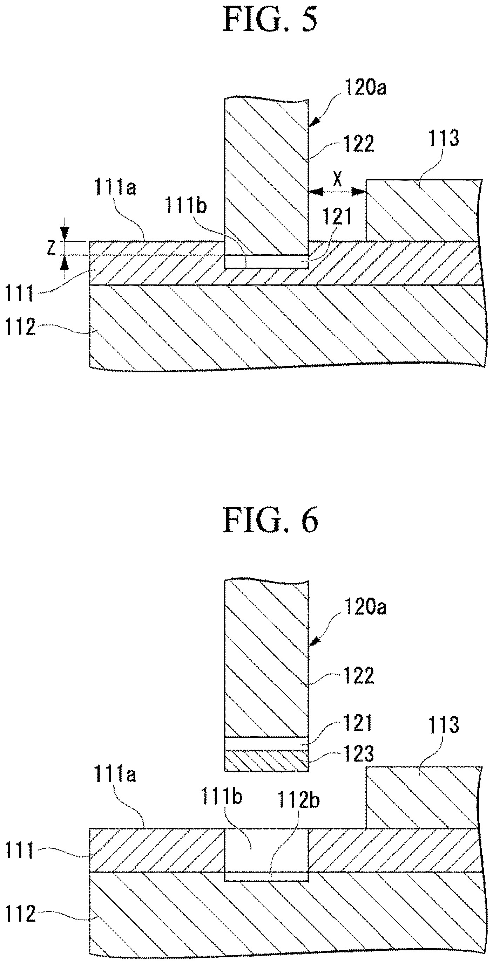

That is, the sample-transporting portion 120a including the supporting portion 122 having a bottom to which the sample-containing medium 121 has adhered is disposed on the connection portion 111a. Thereafter, as shown in FIG. 5, the sample-containing medium 121 is moved down so as to be connected to the groove 111b of the connection portion 111a. In the present embodiment, the sample-containing medium 121 is tightly adhered to the groove 111b, whereby the sample-containing medium 121 can be positioned with respect to all of the horizontal directions (X direction and Y direction) and the vertical direction (Z direction). Consequently, it is possible to accurately connect the sample-containing medium 121 to a predetermined position of the sample-separating medium 111. Therefore, it is possible to easily satisfy the relationship of "$Z \geq 0.4 \times X$". Herein, X is a distance which is formed when the sample-containing medium 121 is connected to the sample-dispersing medium 111 and corresponds to a distance between the end of the protecting portion 113 and the sample-containing medium 121. In addition, Z is a distance between the bottom surface of the protecting portion 113 and the top surface of the sample-separating medium 111.

After the sample-containing medium 121 is connected to the sample-separating medium 111, electrophoresis is carried out by a predetermined method. After the electrophoresis is carried out, the protecting portion 113 is removed from the loading portion 112 by using a spatula or the like.

The sample-separating medium 111 on the loading portion 112 is then removed so as to be used for other analysis.

In the instrument for electrophoresis 100a of the present embodiment, the groove 111b is formed in the connection portion 111a as described above. Accordingly, it is possible to accurately connect the sample-containing medium 121 of the sample-transporting portion 120a and to inhibit the deformation of the sample-containing medium 121 at the time of connection. As a result, it is possible to sufficiently enhance the resolution, reproducibility, and quantitativity of data obtained by the electrophoresis.

In the first embodiment, the groove 111b is not limited to the form shown in FIG. 2. For example, the groove 111b of the sample-separating medium 111 may be a groove with a depth reaching the loading portion 112.

When the groove 111b of the sample-separating medium 111 is a groove with a depth reaching the loading portion 112, a groove 112b corresponding to the groove 111b of the sample-separating medium 111 may be formed in the loading portion 112 as shown in FIG. 6. When the groove 112b is formed in the loading portion 112, it is possible to more accurately position the sample-containing medium 121. Accordingly, it is preferable that at least a coating portion 123 which covers the bottom surface of the sample-containing medium 121 and can fit into the groove 112b of the loading portion 112 be provided to the sample-containing medium 121.

(Second Embodiment)

A second embodiment of the instrument for electrophoresis of the present invention will be described.

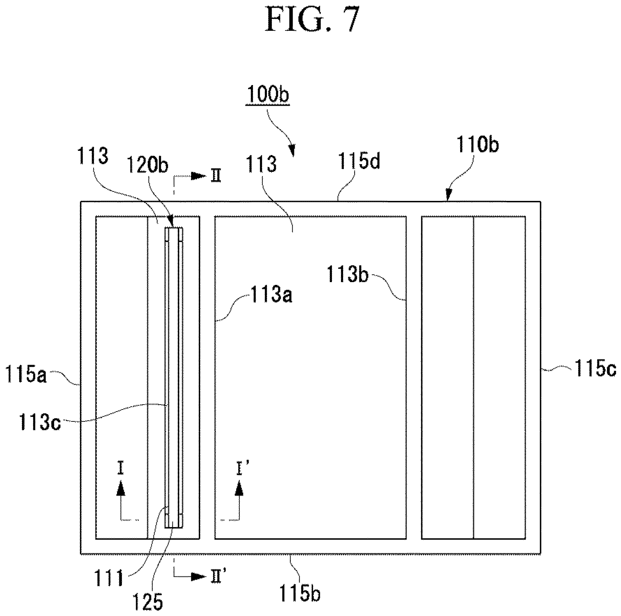

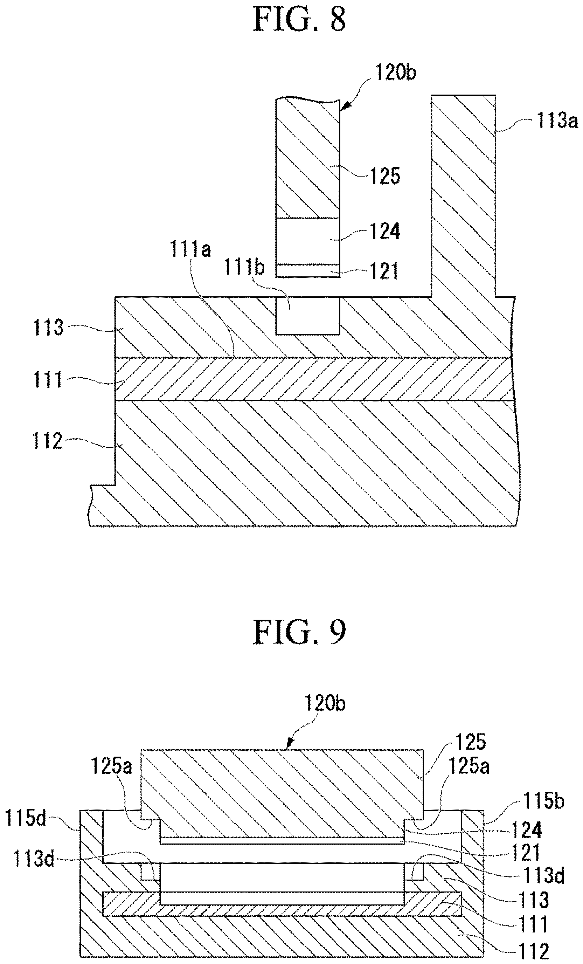

FIGS. 7 to 9 show the instrument for electrophoresis of the present embodiment. FIG. 7 is a top view showing a schematic constitution of the instrument for electrophoresis. FIG. 8 is a cross-sectional view taken along the line I-I' of FIG. 7, and FIG. 9 is a cross-sectional view taken along the line II-II' of FIG. 7.

An instrument for electrophoresis 100b of the present embodiment includes a sample-separating portion 110b and a sample-transporting portion 120b.

The sample-separating portion 110b separates a sample having undergone the first-dimensional electrophoresis.

The sample-transporting portion 120b transports a sample-containing medium that contains the above sample to the sample-separating portion 110b.

[Sample-Transporting Portion]

The sample-transporting portion 120b of the present embodiment includes a first supporting portion 124 and a second supporting portion 125.

The sample-containing medium 121 containing the sample having undergone the first-dimensional electrophoresis is adhered to the bottom surface of the first supporting portion 124.

The second supporting portion 125 is disposed on the first supporting portion 124 and has a shape wider than the first supporting portion 124.

[Sample-Separating Portion]

Similarly to the sample-separating portion 110a of the first embodiment, the sample-separating portion 110b of the present embodiment includes the sample-separating medium 111, the loading portion 112, the protecting portion 113, the bottom portion 114, the first side wall portion 115a, the second side wall portion 115b, the third side wall portion 115c, and the fourth side wall portion 115d.

The groove 111b is formed in the sample-separating medium 111, and the first weir portion 113a and the second weir portion 113b stand on the top surface of the protecting portion 113.

Here, in the present embodiment, the end of the protecting portion 113 close to the first side wall portion 115a is overlapped with the end of the loading portion 112 close to the first side wall portion 115a. In addition, near the end of the protecting portion 113 close to the first side wall portion 115a, an opening portion 113c into which the leading end of the first supporting portion 124 of the sample-transporting portion 120b can be inserted is formed. Moreover, concavities 113d are formed in positions closer to the second side wall portion 115b and fourth side wall portion 115d than to the opening portion opening portion 113c of the protecting portion 113. The concavity 113d is a portion of the second supporting portion 125 of the sample-transporting portion 120b, and is a fitting concavity 113d into which a fitting convexity 125a which is a portion protruding from the first supporting portion 124 can fit. The bottom surface of the fitting convexity 125a of the second supporting portion 125 and the bottom surface of the fitting concavity 113d of the protecting portion 113 form horizontal planes.

The first supporting portion 124 is easily inserted into the opening portion 113c, so the positional accuracy in the direction (X direction) extending along the second side wall portion 115b and the fourth side wall portion 115d is further improved. Therefore, it is preferable that the opening width in the X direction become narrowed toward the bottom of the opening portion. Alternatively, the opening portion 113c preferably has a stepped shape.

Generally, the opening width of the opening portion 113c in the X direction is larger than the thickness of the first supporting portion 124. When the opening width of the opening portion 113c in the X direction is larger than the thickness of the first supporting portion 124, the first supporting portion 124 is caused to abut on the end of the opening portion 113c close to the first side wall portion 115a or to the third side wall portion 115c. In this manner, the positioning in the X direction can be more accurately performed.

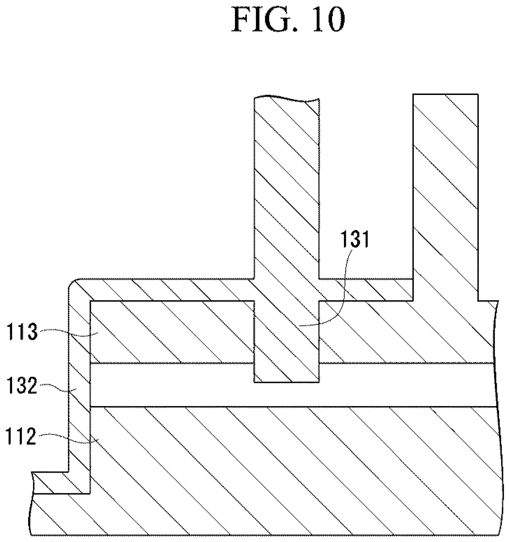

In the present embodiment, in order to form the sample-separating medium 111, the sample-separating medium is not provided between the loading portion 112 and the protecting portion 113 as shown in FIG. 10. Moreover, a groove-forming member 131 for forming the groove 111b is inserted into the opening portion 113c from the top of the protecting portion 113 so as to be disposed between the loading portion 112 and the protecting portion 113. In addition to this, the end that is between the loading portion 112 and the protecting portion 113 and close to the first side wall portion 115a is sealed with a lid portion 132 provided to the groove-forming member 131. Thereafter, a material to be the sample-separating medium 111 is filled from the end that is between the loading portion 112 and the protecting portion 113 and close to the third side wall portion 115c, and the end that is between the loading portion 112 and the protecting portion 113 and close to the third side wall portion 115c side is sealed with sealing or the like. The sample-separating medium 111 is formed in this manner.

After the end that is between the loading portion 112 and the protecting portion 113 and close to the third side wall portion 115c is sealed with sealing or the like, a sample-separating medium may be inserted, and the end may be finally sealed with the lid portion 132 so as to form the sample-separating medium 111.

[How to Use]

The instrument for electrophoresis 100b of the present embodiment is used in the following manner.

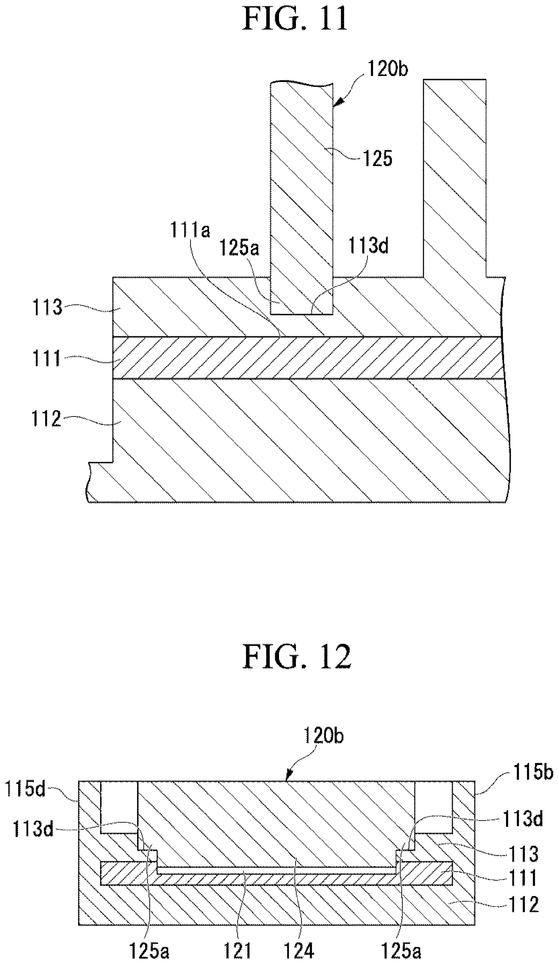

That is, the sample-transporting portion 120b including a first supporting portion 124 having a bottom surface to which the sample-containing medium 121 has adhered is disposed on the opening portion 113c of the protecting portion 113. Thereafter, the sample-transporting portion 120b is moved down such that the sample-containing medium 121 and the first supporting portion 124 are inserted into the opening portion 113c, thereby bringing the sample-containing medium 121 into contact with the sample-separating medium 111. Subsequently, as shown in FIGS. 11 and 12, the fitting convexities 125a are caused to fit into the fitting concavities 113d, thereby fixing the sample-transporting portion 120b.

In the present embodiment, the fitting convexities 125a are caused to fit into the fitting concavities 113d, whereby the sample-containing medium 121 is positioned with respect to all of the X, Y, and Z directions. The Y direction is a direction extending along the first side wall portion 115a and the third side wall portion 115c, and the Z direction is a vertical direction.

Consequently, it is possible to accurately connect the sample-containing medium 121 to a predetermined position of the sample-separating medium 111.

Therefore, it is possible to easily satisfy the relationship of "$Z \geq 0.4 \times X$".

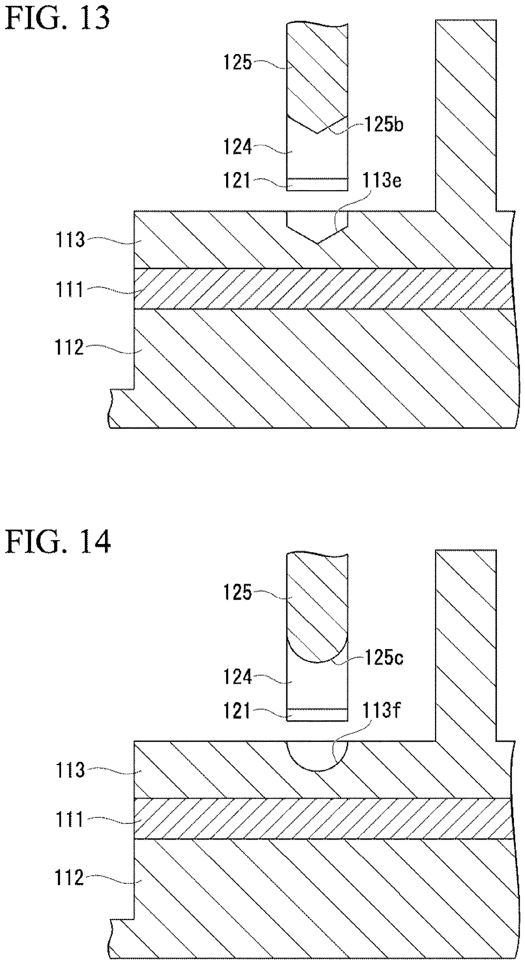

In the second embodiment, the fitting convexity 125a and the fitting concavity 113d are not limited to those shown in FIGS. 8 and 9. FIGS. 13 and 14 show modified examples of the fitting convexity and the fitting concavity.

A fitting convexity 125b shown in FIG. 13 has the shape of a wedge of which the convexity faces downward. A fitting concavity 113e is shaped like a V-valley into which the fitting convexity 125b can fit.

A fitting convexity 125c shown in FIG. 14 has a shape which includes a curved leading end and of which the convexity faces downward. A fitting concavity 113f is shaped like a valley including a curved bottom surface into which the fitting convexity 125c can fit.

In the second embodiment, the groove 111b may not be formed in the sample-dispersing medium 111. Here, if the groove 111b is formed, the connection position is more accurately determined since the deformation of the sample-containing medium 121 can be prevented.

[Third Embodiment]

A third embodiment of the instrument for electrophoresis of the present invention will be described.

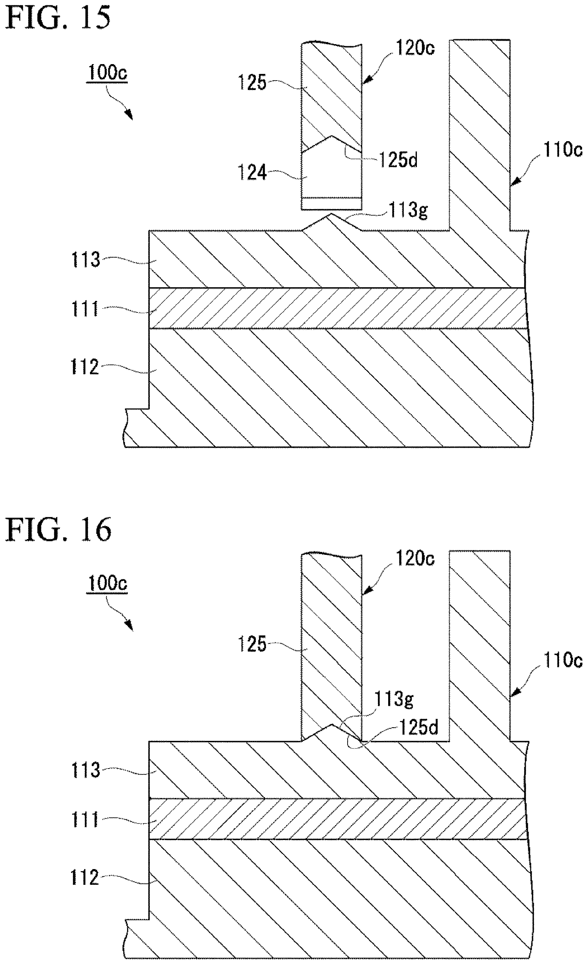

FIG. 15 is an enlarged cross-sectional view showing a portion of the instrument for electrophoresis of the present embodiment. An instrument for electrophoresis 100c of the present embodiment includes a sample-separating portion 110c and a sample-transporting portion 120c.

The sample-separating portion 110c separates a sample having undergone the first-dimensional electrophoresis.

The sample-transporting portion 120c transports a sample-containing medium that contains the above sample to the sample-separating portion 110c.

[Sample-Transporting Portion]

Similarly to the sample-transporting portion 120b used in the second embodiment, the sample-transporting portion 120c of the present embodiment includes the first supporting portion 124 and the second supporting portion 125.
The sample-containing medium 121 that contains the sample having undergone the first-dimensional electrophoresis has adhered to the bottom surface of the first supporting portion 124.
The second supporting portion 125 is disposed on the first supporting portion 124, and has a shape that is wider than the first supporting portion 124.

[Sample-Separating Portion]

Similarly to the sample-separating portion 110a of the first embodiment, the sample-separating portion 110c of the present embodiment includes the sample-separating medium 111, the loading portion 112, the protecting portion 113, the bottom portion 114, the first side wall portion 115a, the second side wall portion 115b, the third side wall portion 115c, and the fourth side wall portion 115d.
The first weir portion 113a and the second weir portion 113b stand on the top surface of the protecting portion 113.
Here, in the present embodiment, the end of the protecting portion 113 close to the first side wall portion 115a is overlapped with the end of the loading portion 112 close to the first side wall portion 115a, similarly to the sample-separating portion 110b of the second embodiment. In addition, near the end of the protecting portion 113 close to the first side wall portion 115a, the opening portion 113c into which the leading end of the first supporting portion 124 of the sample-transporting portion 120c can be inserted is formed.
In addition, fitting convexities 113g having the shape of a wedge of which the convexity faces upward is formed in positions closer to the second side wall portion 115b and the fourth side wall portion 115d than to the opening portion 113c of the protecting portion 113. Fitting concavities 125d are formed in portions which are a portion of the second supporting portion 125 of the sample-transporting portion 120c and protrudes from the first supporting portion 124. The fitting concavity 125d has a V-shaped bottom surface which is narrowed upwardly and into which the fitting convexity 113g of the protecting portion 113 can fit.
In the third embodiment, the groove 111b may or may not be formed in the sample-dispersing medium 111, similarly to the second embodiment.

[How to Use]

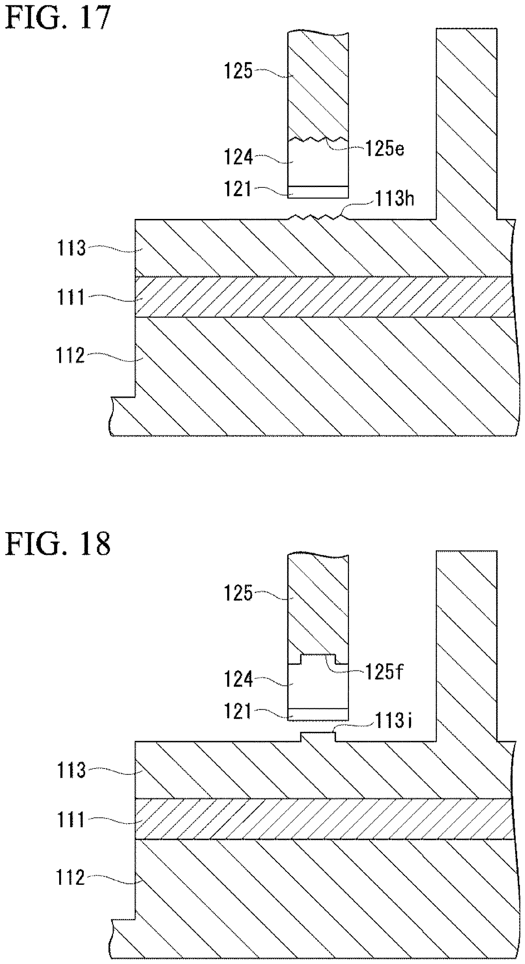

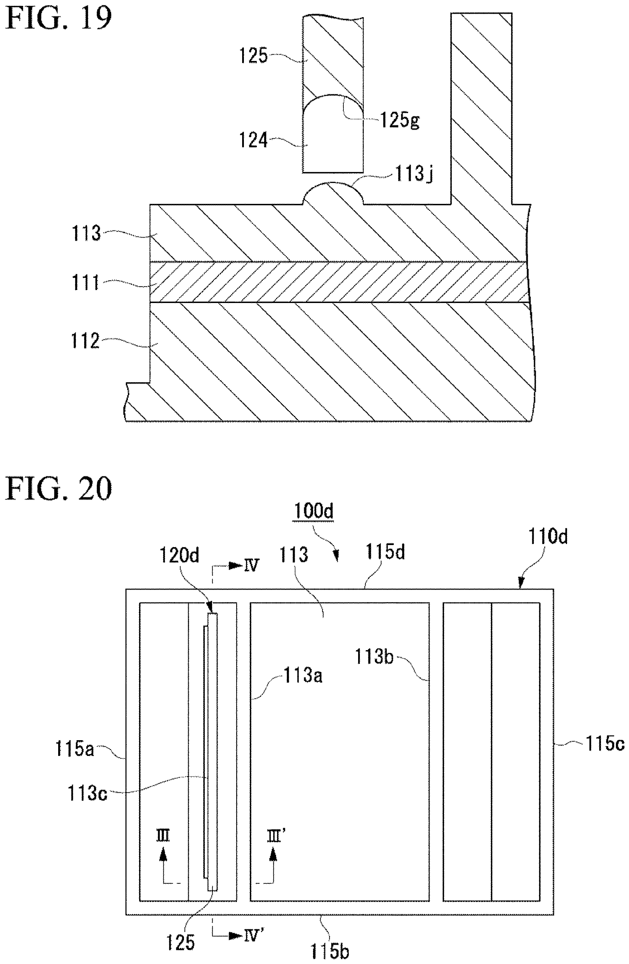

The instrument for electrophoresis 100c of the present embodiment will be described below.
That is, the sample-transporting portion 120c including the first supporting portion 124 having a bottom surface to which the sample-containing medium 121 has adhered is disposed on the opening portion 113c of the protecting portion 113. Thereafter, the sample-transporting portion 120c is moved down such that the sample-containing medium 121 and the first supporting portion 124 are inserted into the opening portion 113c, thereby bringing the sample-containing medium 121 into contact with the sample-separating medium 111. In addition, as shown in FIG. 16, the fitting convexity 113g is caused to fit into the fitting concavity 125d, thereby fixing the sample-transporting portion 120c.
In the present embodiment, the fitting convexity 113g is caused to fit into the fitting concavity 125d, whereby the sample-containing medium 121 can be positioned with respect to all of the X, Y, and Z directions. Consequently, it is possible to accurately connect the sample-containing medium 121 to a predetermined position of the sample-separating medium 111. Therefore, it is possible to easily satisfy the relationship of "$Z \geq 0.4 \times X$".
In the third embodiment, the fitting convexity 113g and the fitting concavity 125d are not limited to those shown in FIG. 15. FIGS. 17 to 19 show modified examples of the fitting convexity and the fitting concavity.
A fitting convexity 113h shown in FIG. 17 is a portion that is formed in the protecting portion 113 and includes a plurality of wedge-like convexities of which the top portions are extending along a single direction. A fitting concavity 125e is a portion that is formed in the second supporting portion 125 and has a corrugated bottom surface into which the fitting convexity 113h can fit.
A fitting convexity 113i shown in FIG. 18 is a table-shaped convexity which is formed in the protecting portion 113 and has a rectangular top surface. A fitting concavity 125f is a rectangular concavity which is formed in the second supporting portion 125 and into which the fitting convexity 113i can fit.
A fitting convexity 113j shown in FIG. 19 is a convexity which is formed in the protecting portion 113 and has a leading end that is a curved convexity facing upward. A fitting concavity 125g is a concavity that is formed in the second supporting portion 125 and has a curved bottom surface into which the fitting convexity 113j can fit.

[Fourth Embodiment]

A fourth embodiment of the instrument for electrophoresis of the present invention will be described.

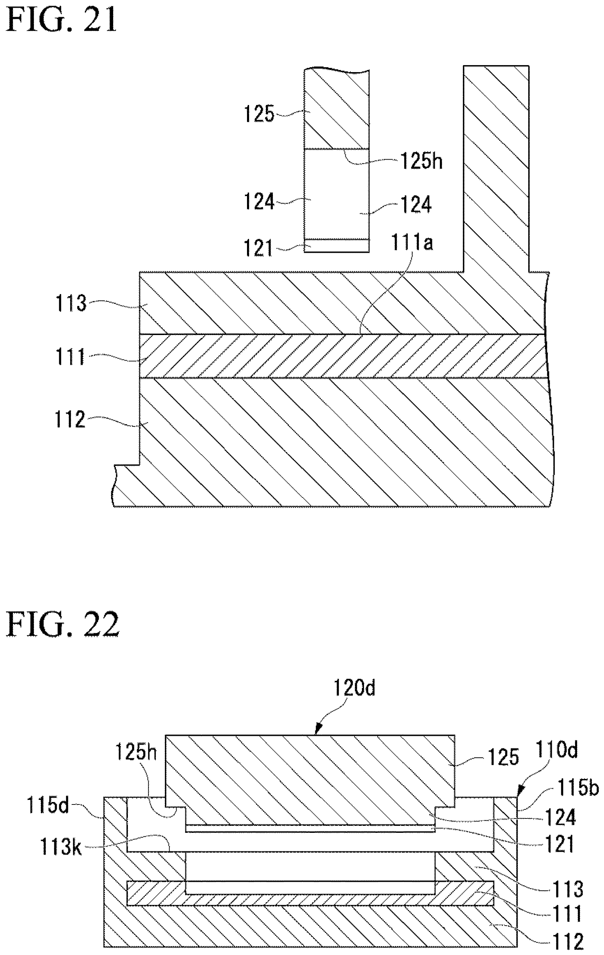

FIGS. 20 to 22 show the instrument for electrophoresis of the present embodiment. An instrument for electrophoresis 100d of the present embodiment includes a sample-separating portion 110d and a sample-transporting portion 120d.

The sample-separating portion 110d separates a sample having undergone the first-dimensional electrophoresis.

The sample-transporting portion 120d transports a sample-containing medium that contains the above sample to the sample-separating portion 110d.

The sample-transporting portion 120d of the present embodiment is the same as the sample-transporting portion 120b used in the second embodiment.

[Sample-Separating Portion]

Similarly to the sample-separating portion 110a of the first embodiment, the sample-separating portion 110d of the present embodiment includes the sample-separating medium 111, the loading portion 112, the protecting portion 113, the bottom portion 114, the first side wall portion 115a, the second side wall portion 115b, the third side wall portion 115c, and the fourth side wall portion 115d.

The first weir portion 113a and the second weir portion 113b stand on the top surface of the protecting portion 113.

Here, in the present embodiment, the end of the protecting portion 113 close to the first side wall portion 115a is overlapped with the end of the loading portion 112 close to the first side wall portion 115a. In addition, near the end of the protecting portion 113 close to the first side wall portion 115a, the opening portion 113c into which the leading end of the first supporting portion 124 of the sample-transporting portion 120d can be inserted is formed.

In the present embodiment, portions which are a portion of the protecting portion 113 of the sample-separating portion 110d and closer to the second side wall portion 115b and the fourth side wall portion 115d than to the opening portion 113c form a movement-restricting portions 113k (positioning portions). A bottom surface 125h of the second supporting portion 125 of the sample-transporting portion 120d abuts on the movement-restricting portions 113k.

Even in the fourth embodiment, the groove 111b may or may not be formed in the sample-dispersing medium 111.

[How to Use]

The instrument for electrophoresis 100d of the present embodiment is used in the following manner.

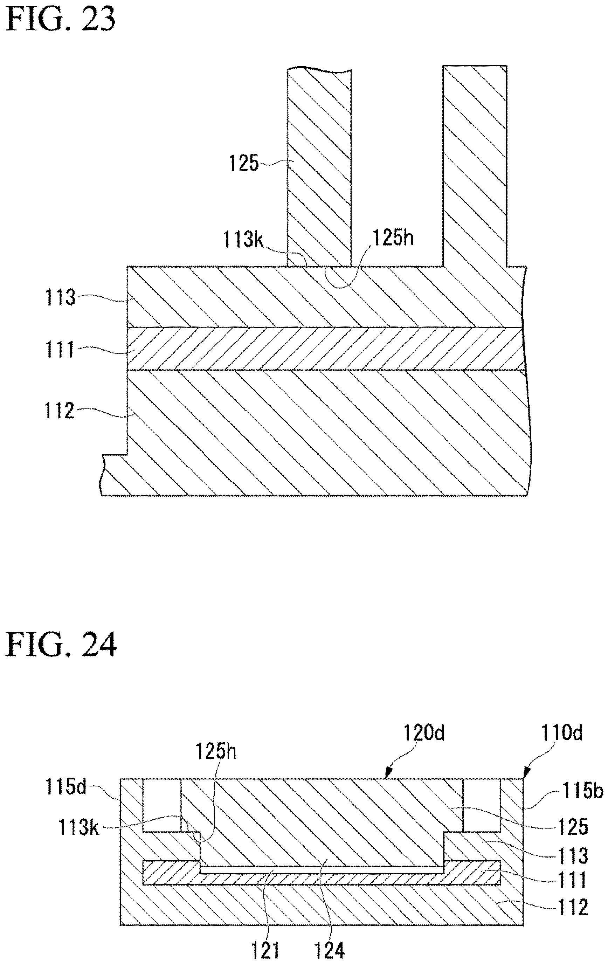

That is, the sample-transporting portion 120c including the first supporting portion 124 having a bottom surface to which the sample-containing medium 121 has adhered is disposed on the opening portion 113c of the protecting portion 113. Thereafter, the sample-transporting portion 120c is moved down such that the sample-containing medium 121 and the first supporting portion 124 are inserted into the opening portion 113c and that the first supporting portion 124 contacts the lateral surface of the opening portion 113c close to the third side wall portion 111c, thereby bringing the sample-containing medium 121 into contact with the sample-separating medium 111. In addition, as shown in FIGS. 23 and 24, the sample-transporting portion 120c is moved down until the bottom surface 125h of the second supporting portion 125 of the sample-transporting portion 120d abuts on the movement-restricting portion 113k.

In the present embodiment, the bottom surface 125h of the second supporting portion 125 of the sample-transporting portion 120d is caused to abut on the movement-restricting portions 113k, whereby the sample-containing medium 121 is positioned with respect to the Z direction. In addition, the first supporting portion 124 is inserted into the opening portion 113c, whereby the sample-containing medium 121 can be positioned with respect to the X and Y directions. Particularly, the first supporting portion 124 is brought into contact with the lateral surface of the opening portion 113c close to the third side wall portion 111c, whereby the sample-containing medium 121 can be more accurately positioned with respect to the X direction. Consequently, it is possible to accurately connect the sample-containing medium 121 to a predetermined position of the sample-separating medium 111. Therefore, it is possible to easily satisfy the relationship of "$Z \geq 0.4 \times X$".

(Fifth Embodiment)

A fifth embodiment of the instrument for electrophoresis of the present invention will be described.

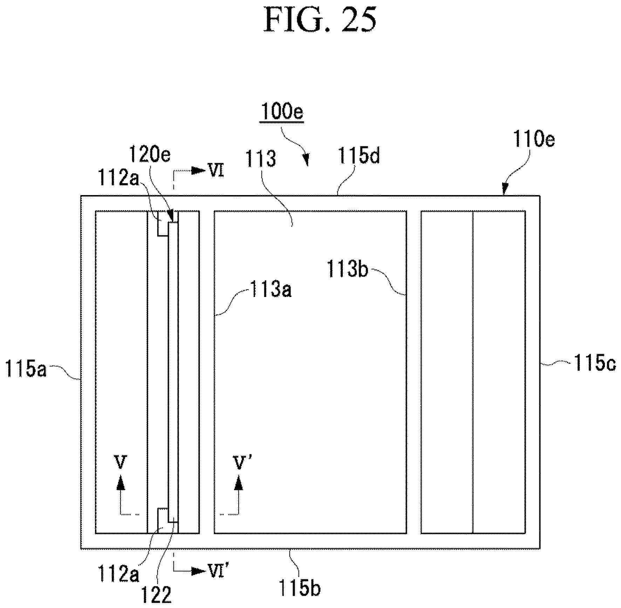

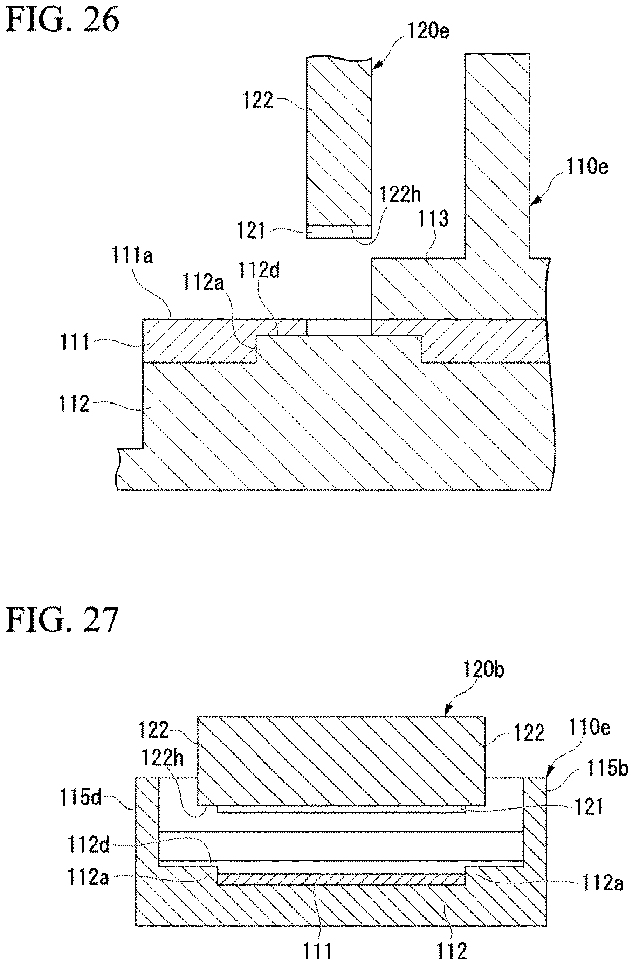

FIGS. 25 to 27 show the instrument for electrophoresis of the present embodiment. An instrument for electrophoresis 100e of the present embodiment includes a sample-separating portion 110e and a sample-transporting portion 120e.

The sample-separating portion 110e separates a sample having undergone the first-dimensional electrophoresis.

The sample-transporting portion 120e transports a sample-containing medium that contains the above sample to the sample-separating portion 110e.

The sample-transporting portion 120e of the present embodiment is the same as the sample-transporting portion 120a used in the first embodiment.

[Sample-Separating Portion]

Similarly to the sample-separating portion 110a of the first embodiment, a sample-separating portion 110e of the present embodiment includes the sample-separating medium 111, the loading portion 112, the protecting portion 113, the bottom portion 114, the first side wall portion 115a, the second side wall portion 115b, the third side wall portion 115c, and the fourth side wall portion 115d.

The first weir portion 113a and the second weir portion 113b stand on the top surface of the protecting portion 113.

Here, in the loading portion 112, movement-restricting portions 112a (positioning portions) are provided to portions which are below the connection portion 111a of the sample-separating medium 111 and close to the second side wall portion 115b and the fourth side wall portion 115d. A top surface 112d of the movement-restricting portion 112a is a horizontal plane, and a bottom surface 122h of the supporting portion 122 of the sample-transporting portion 120e abuts on this plane.

Even in the fifth embodiment, the groove 111b may or may not be formed in the sample-dispersing medium 111.

[How to Use]

The instrument for electrophoresis 100e of the present embodiment is used in the following manner.

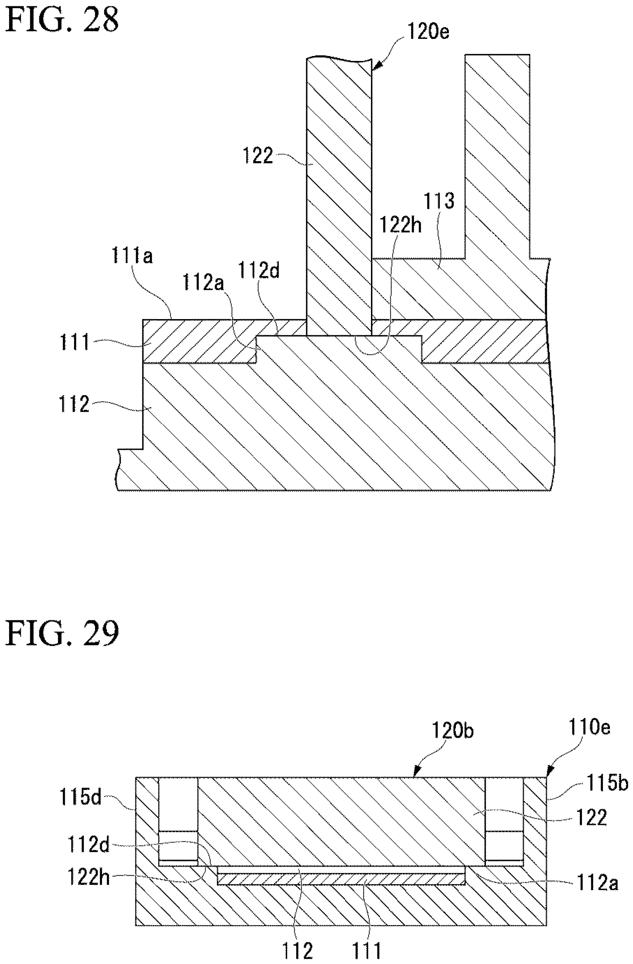

That is, the sample-transporting portion 120e including the supporting portion 122 having a bottom surface to which the sample-containing medium 121 has adhered is disposed on the opening portion 113c of the protecting portion 113. Thereafter, the sample-transporting portion 120e is moved down such that the sample-containing medium 121 and the supporting portion 122 are inserted into the opening portion 113c and that the supporting portion 122 contacts the end surface of the protecting portion 113 close to the first side wall portion 111a, thereby bringing the sample-containing medium 121 into contact with the sample-separating medium 111. In addition, as shown in FIGS. 28 and 29, the sample-transporting portion 120e is moved down until the bottom surface 122h of the supporting portion 122 of the sample-transporting portion 120e abuts on the movement-restricting portion 112a.

In the present embodiment, the bottom surface 122h of the supporting portion 122 of the sample-transporting portion 120e is caused to abut on the movement-restricting portion 112a, whereby the sample-containing medium 121 can be positioned with respect to the Z direction. In addition, the supporting portion 122 is brought into contact with the end surface of the protecting portion 113, whereby the sample-containing medium 121 can be accurately positioned with respect to the X direction. Consequently, it is possible to accurately connect the sample-containing medium 121 to a predetermined position of the sample-separating medium 111. Therefore, it is possible to easily satisfy the relationship of "$Z \geq 0.4 \times X$".

(Sixth Embodiment)

A sixth embodiment of the instrument for electrophoresis of the present invention will be described.

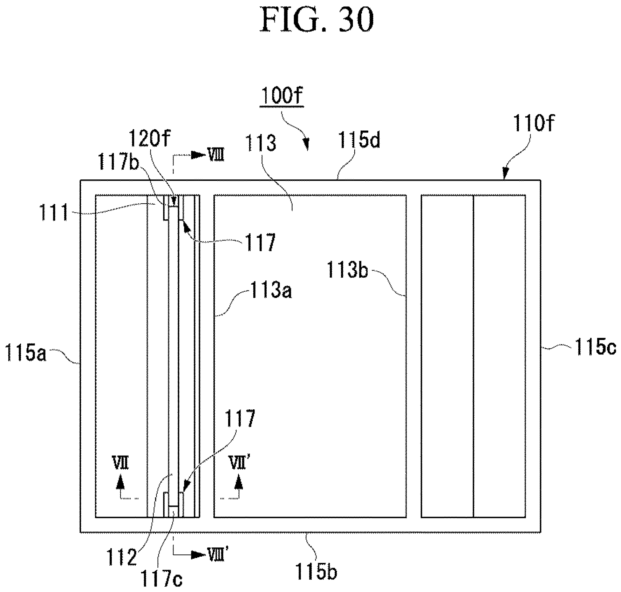

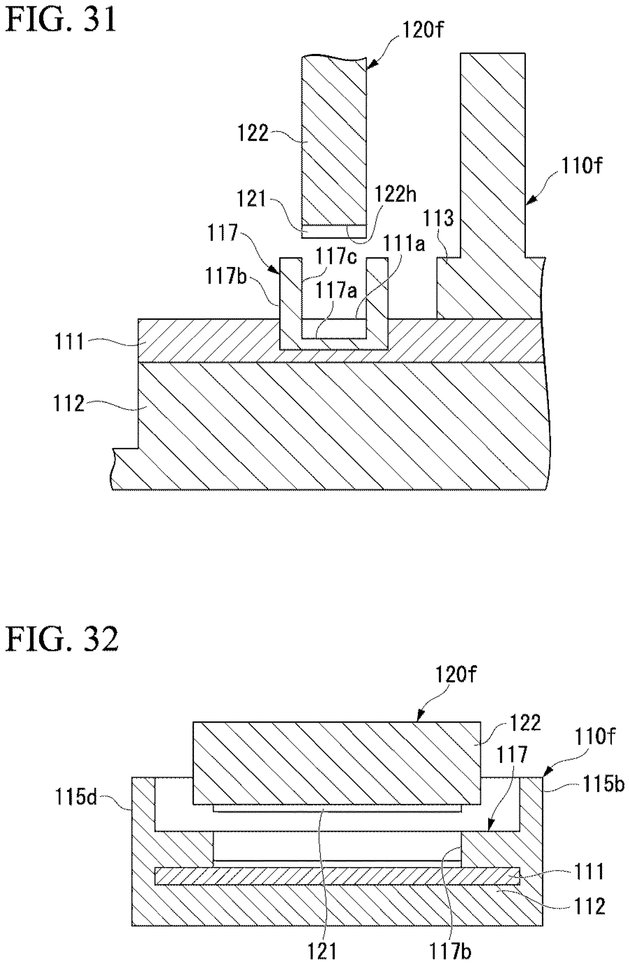

FIGS. 30 to 32 show the instrument for electrophoresis of the present embodiment. An instrument for electrophoresis 100f of the present embodiment includes a sample-separating portion 110f and a sample-transporting portion 120f.

The sample-separating portion 110f separates a sample having undergone the first-dimensional electrophoresis.

The sample-transporting portion 120f transports a sample-containing medium that contains the above sample to the sample-separating portion 110f.

The sample-transporting portion 120f of the present embodiment is the same as the sample-transporting portion 120a used in the first embodiment.

[Sample-Separating Portion]

Similarly to the sample-separating portion 110a of the first embodiment, the sample-separating portion 110f of the present embodiment includes the sample-separating medium 111, the loading portion 112, the protecting portion 113, the bottom portion 114, the first side wall portion 115a, the second side wall portion 115b, the third side wall portion 115c, and the fourth side wall portion 115d.

The first weir portion 113a and the second weir portion 113b stand on the top surface of the protecting portion 113.

Here, in the present embodiment, movement-restricting portions 117 (positioning portions) are respectively provided to portions which are a portion of the second side wall portion 115b and the fourth side wall portion 115d and which correspond to the connection portion 111a of the sample-separating medium 111. A top surface 117a of the movement-restricting portion 117 is a horizontal plane, and the bottom surface 122h of the supporting portion 122 of the sample-transporting portion 120f abuts on this plane. In addition, a guiding portion 117b where a groove 117c into which the end of the supporting portion 122 in the length direction is inserted is formed is provided to each movement-restricting portion 117.

Even in the sixth embodiment, the groove 111b may or may not be formed in the sample-dispersing medium 111.

[How to Use]

The instrument for electrophoresis 100f of the present embodiment is used in the following manner.

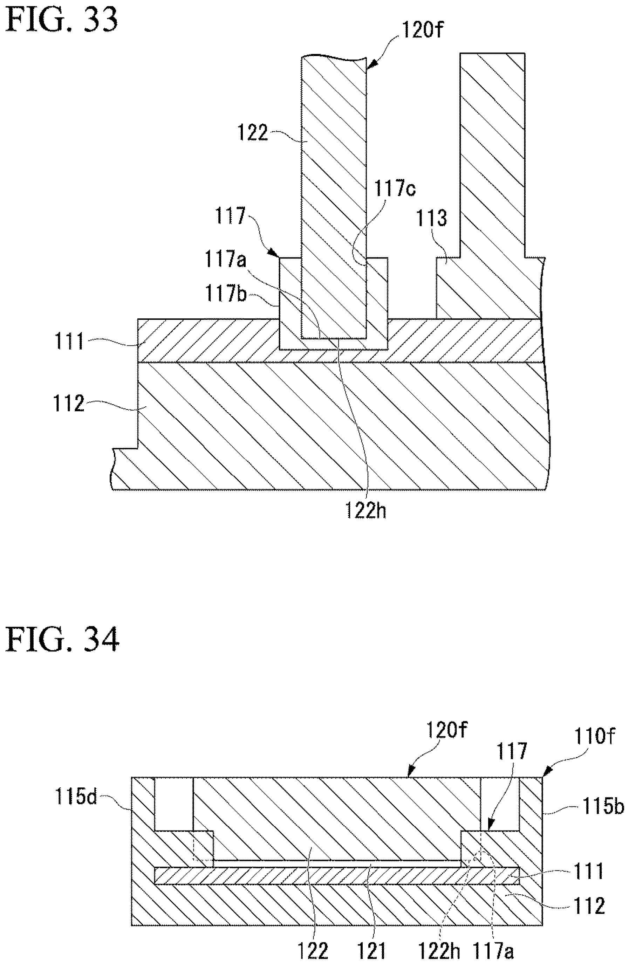

That is, the sample-transporting portion 120e including the supporting portion 122 having a bottom surface to which the sample-containing medium 121 has adhered is disposed on the connection portion 111. Thereafter, as shown in FIGS. 33 and 34, the sample-transporting portion 120f is moved down until the end of the supporting portion 122 in the length direction is inserted into the groove 117c of the guiding portion 117b and the bottom surface 122h of the supporting portion 122 of the sample-transporting portion 120f abuts on the top surface 117a of the movement-restricting portion 117.

In the present embodiment, the movement-restricting portion 117 is caused to abut on the bottom surface 122h of the supporting portion 122 of the sample-transporting portion 120f, whereby the sample-containing medium 121 can be positioned with respect to the Z direction. In addition, the end of the supporting portion 122 in the length direction is inserted into the groove 117c of the guiding-portion 117b, whereby the sample-containing medium 121 can be positioned with respect to the X and Y directions. Consequently, it is possible to accurately connect the sample-containing medium 121 to a predetermined position of the sample-separating medium 111. Therefore, it is possible to easily satisfy the relationship of "$Z \geq 0.4 \times X$".

(Seventh Embodiment)

A seventh embodiment of the instrument for electrophoresis of the present invention will be described.

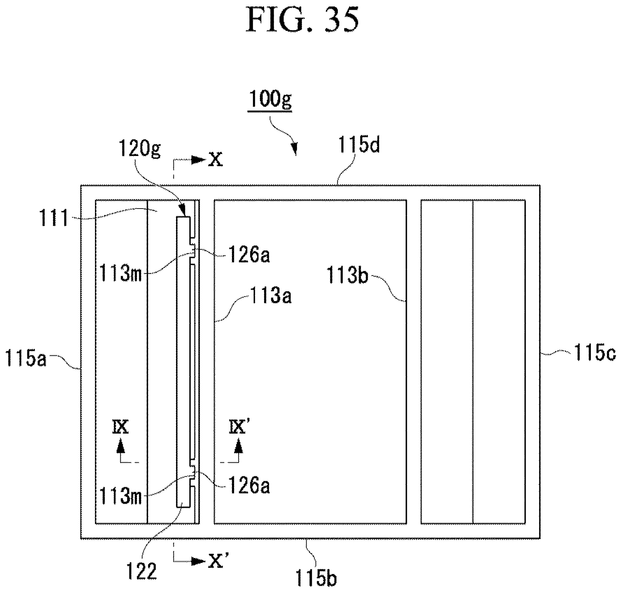

FIGS. 35 to 37 show the instrument for electrophoresis of the present embodiment. An instrument for electrophoresis 100g of the present embodiment includes a sample-separating portion 110g and a sample-transporting portion 120g.

The sample-separating portion 110g separates a sample having undergone the first-dimensional electrophoresis.

The sample-transporting portion 120g transports a sample-containing medium that contains the above sample to the sample-separating portion 110d.

[Sample-Transporting Portion]

The sample-transporting portion 120g of the present embodiment includes the supporting portion 122 and two convexities 126a.

The sample-containing medium 121 that contains a sample having undergone the first-dimensional electrophoresis is adhered to the bottom surface of the supporting portion 122.

The convexities 126a are provided to the surface of the supporting portion 122 close to the third side wall portion 115c.

[Sample-Separating Portion]

Similarly to the sample-separating portion 110a of the first embodiment, the sample-separating portion 110g of the present embodiment includes the sample-separating medium 111, the loading portion 112, the protecting portion 113, the bottom portion 114, the first side wall portion 115a, the second side wall portion 115b, the third side wall portion 115c, and the fourth side wall portion 115d.

The first weir portion 113a and the second weir portion 113b stand on the top surface of the protecting portion 113.

Here, in the present embodiment, grooves 113m into which the convexities 126a of the sample-transporting portion 120g are inserted are formed in the first weir portion 113a of the sample-separating portion 110g close to the first side wall portion 115a. Here, the groove 113m is formed in a direction orthogonal to the surface of the sample-separating medium 111. In addition, the sample-separating portion 110g includes a terminal 113n on which the convexity 126a abuts to restrict the movement of the sample-transporting portion 120g. The first weir portion 113a in which the grooves 113m are formed as described above forms a guiding portion (positioning portion) of the sample-transporting portion 120g.

Even in the seventh embodiment, the groove 111b may or may not be formed in the sample-dispersing medium 111.

[How to Use]

The instrument for electrophoresis 100g of the present embodiment is used in the following manner.

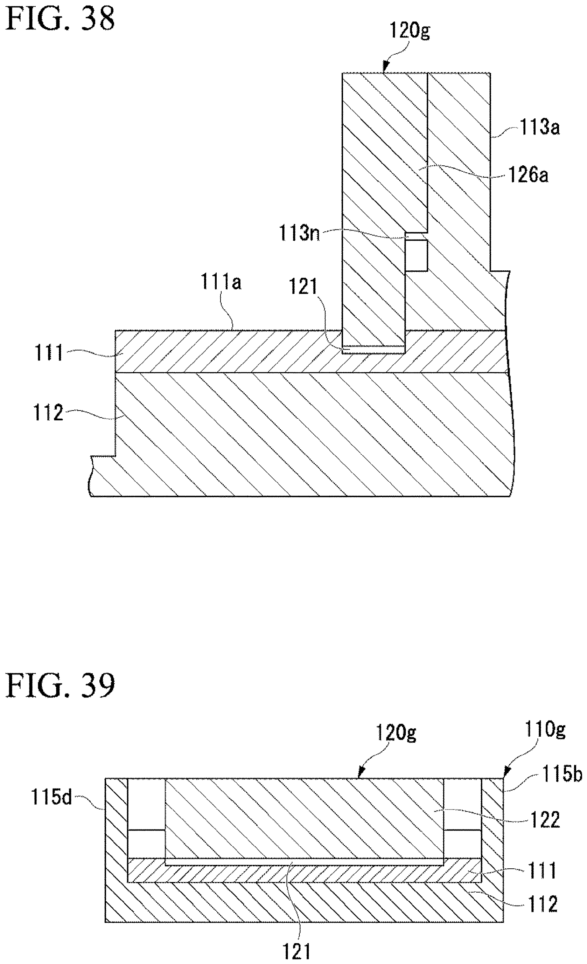

That is, the sample-transporting portion 120g including the supporting portion 122 having a bottom to which the sample-containing medium 121 has adhered is disposed on the opening portion 113c of the protecting portion 113. In addition to this, as shown in FIGS. 38 and 39, the convexities 126a formed in the supporting portion 122 are caused to fit into the grooves 113m formed in the first weir portion 113a. Thereafter, while the convexities 126a are moved along the grooves 113m, the sample-transporting portion 120g is moved down so as to cause the convexities 126a to abut on the terminals 113n of the grooves 113m, thereby stopping the downward movement of the sample-transporting portion 120g.

In the present embodiment, the convexities 126a are inserted into the grooves 113m, whereby the sample-containing medium 121 can be positioned with respect to the X and Y directions. In addition, the convexities 126a are caused to abut on the terminals 113n of the grooves 113m, whereby the sample-containing medium 121 can be positioned with respect to the Z direction. Consequently, it is possible to accurately connect the sample-containing medium 121 to a predetermined position of the sample-separating medium 111. Therefore, it is possible to easily satisfy the relationship of "$Z \geq 0.4 \times X$".

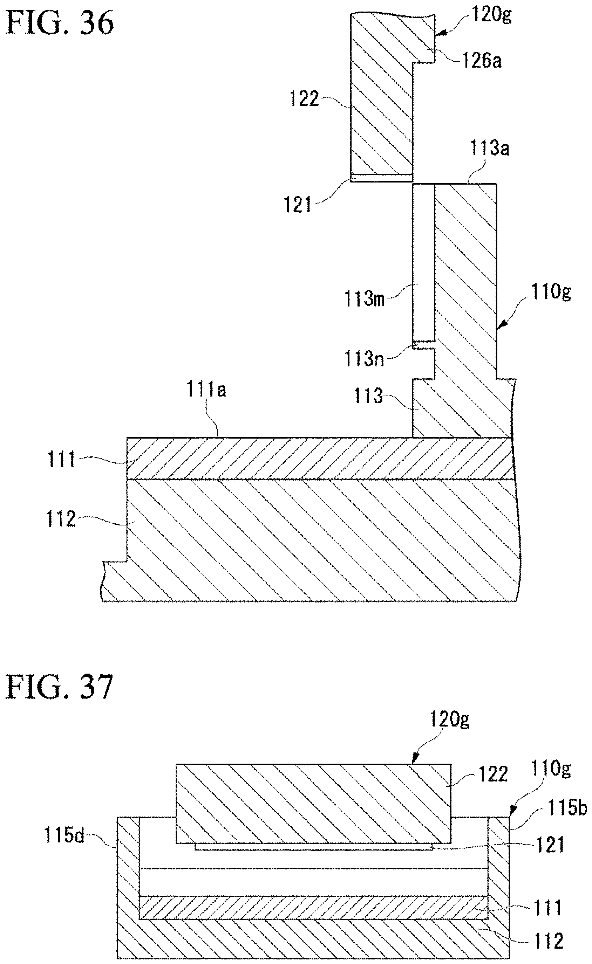

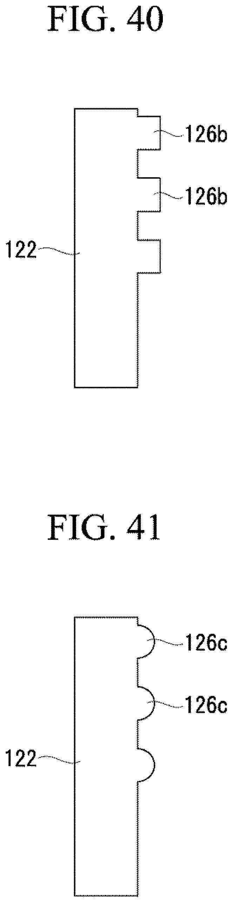

In the seventh embodiment, the convexities 126a are not limited to those shown in FIG. 36. FIGS. 40 and 41 show modified examples of the convexities.

Convexities 126b shown in FIG. 40 are rectangles and arranged in a straight line. Convexities 126c shown in FIG. 41 are dome-like and arranged in a straight line.

In addition, one convexity 126a or three or more convexities 126a may be provided to the first weir portion 113a.

(Other Embodiments)

The present invention is not limited to the respective embodiments described above, and various modifications can be made within the scope described in claims. Embodiments that are obtained by appropriately combining technical means respectively disclosed in different embodiments are also included in the technical scope of the present invention.

For example, in the above embodiments, the sample-containing medium contains a sample having undergone the first-dimensional electrophoresis. However, the sample-containing medium may evenly contain a sample that has not undergone electrophoresis.

Moreover, the protecting portion 113 may not have a portion which is closer to the first side wall portion 115a side than to the opening portion 113c.

In addition, in the second to fourth embodiments, the end of the protecting portion 113 close to the first side wall portion 115a may not be overlapped with the end of the loading portion 112 close to the first side wall portion 115a. For example, the end of the protecting portion 113 close to the first side wall portion 115a may be formed in a position closer to the third side wall portion 115c than to the end of the loading portion 112 close to the first side wall portion 115a.

<Electrophoresis Apparatus>

An electrophoresis apparatus as an example of the present invention includes the instrument for electrophoresis 100 and a pair of electrodes 201 and 202 as shown in cross-sectional view of FIGS. 42A and 42B.

The electrodes 201 and 202 generate potential in a surface direction in the sample-separating medium 111 of the instrument for electrophoresis 100.

Generally, an electrode in the upstream side of electrophoresis is taken as the cathode 201, and an electrode in the downstream side of electrophoresis is taken as the anode 202. The cathode 201 is preferably positioned near the end surface of the sample-separating medium 111 in the upstream side of electrophoresis, and the anode 202 is preferably positioned near the end surface of the sample-separating medium 111 in the downstream side of electrophoresis. In addition, the cathode 201 and the anode 202 are preferably arranged in a straight line with the sample-separating medium 111 interposed therebetween.

In the electrophoresis method used in the electrophoresis apparatus as an example of the present invention, for example, first and second buffer solution tanks are first filled with a buffer solution, and then a sample-transporting portion having a supporting portion to which a sample-containing medium has adhered is moved down toward a connection portion. Subsequently, the sample-transporting portion is connected to a predetermined position of the connection position of the sample-separating portion by a positioning portion, and voltage is applied between electrodes, thereby performing electrophoresis.

If the electrophoresis apparatus as an example of the present invention is used, it is possible to accurately connect the sample-containing medium to a predetermined position of the sample-separating medium. Consequently, data obtained by the above electrophoresis method show sufficiently high resolution, reproducibility, and quantitativity.

Industrial Applicability

The instrument for electrophoresis and the electrophoresis apparatus of the present invention can be suitably used for, for example, biomolecular analyses, food inspection, diagnoses, and the like.

Reference Symbols

    100: Electrophoresis apparatus
    100a, 100b, 100c, 100d, 100e, 100f, 100g: Instruments for electrophoresis
    110, 110a, 110a, 110b, 110c, 110d, 110e, 110f, 110g: Sample-separating portions
    111: Sample-separating medium
    111a: Connection portion
    111b: Groove
    112: Loading portion
    112a: Movement-restricting portion
    112b: Groove
    113: Protecting portion
    113a: First weir portion
    113b: Second weir portion
    113c: Opening portion
    113d, 113e, 113f: Fitting concavities
    113g, 113h, 113i, 113j: Fitting convexities
    113k: Movement-restricting portion
    113m Groove
    113n: Terminal
    114 Bottom portion
    115a: First side wall portion
    115b: Second side wall portion
    115c: Third side wall portion
    115d: Fourth side wall portion
    116a: First buffer solution tank
    116b: Second buffer solution tank
    117: Movement-restricting portion
    117b: Guiding portion
    117c: Groove
    120, 120a, 120a, 120b, 120c, 120d, 120e, 120f, 120g: Sample-transporting portions
    121: Sample-containing medium
    122: Supporting portion
    122h: Bottom surface
    123: Coating portion
    124: First supporting portion
    125: Second supporting portion
    125a, 125b, 125c: Fitting convexities
    125d, 125e, 125f, 125g: Fitting concavities
    125h: Bottom surface
    126a, 126b, 126c: Convexities
    201: Cathode
    202: Anode

**Claims**

1.  An instrument for electrophoresis comprising:

    a sample-separating portion (110) including
    a loading portion (112) on which a sample-separating medium (111) that separates a sample has been loaded,
    side wall portions (115) provided to a lateral surface of the loading portion (112), and
    a protecting portion (113) that is disposed on the sample-separating medium (111) such that a portion of the sample-separating medium (111) is exposed;
    a sample-transporting portion (120) that transports a sample-containing medium to the sample-separating portion (110) including a supporting portion (122) to which the sample containing medium (121) containing the sample adheres; and
    a positioning portion (111b) that is provided to the loading portion (112), the protecting portion (113), the side wall portion and/or the sample-transporting portion (120) and used for connecting the sample-containing medium (121) to a predetermined position of the exposed portion of the sample-separating medium (111),
    **characterized in that** the positioning portion (111b) is configured to determine the predetermined position such that a relationship is satisfied, the relationship being $Z \geq 0.4 \times X$, and
    wherein the X is first distance between the end of the protecting portion (113) and the sample-containing medium (121), and the Z is second distance between the bottom surface of the protecting portion (113) and the top surface of the sample-containing medium (121).

2.  The instrument for electrophoresis according to claim 1,
    wherein the positioning portion is constituted with a fitting convexity (125) which is provided to the sample-transporting portion (120) and a fitting concavity which is provided to the protecting portion (113) of the sample-separating portion and into which the fitting convexity (125) can fit.

3.  The instrument for electrophoresis according to claim 1,
    wherein the positioning portion is constituted with a fitting convexity which is provided to the protecting portion (113) of the sample-separating portion (110) and a fitting concavity which is provided to the sample-transporting portion (120) and into which the fitting convexity can fit.

4.  The instrument for electrophoresis according to claim 1,
    wherein the positioning portion is a movement-restricting portion (113k) which is a portion of the protecting portion (113) of the sample-separating portion (110) and on which a bottom surface of the supporting portion of the sample-transporting portion (120) abuts.

5.  The instrument for electrophoresis according to claim 1,
    wherein the positioning portion is a movement-restricting portion (113k) which is provided to the side wall portion of the sample-separating portion (110) and on which a bottom surface of the supporting portion of the sample-transporting portion (120) abuts.

6.  The instrument for electrophoresis according to claim 5,
    wherein a guiding portion provided with a groove in which a portion of the sample-transporting portion (120) is inserted is provided to the movement-restricting portion (113k).

7.  The instrument for electrophoresis according to claim 1,
    wherein the positioning portion includes a guiding portion which is provided to the protecting portion (113) of the sample-separating portion (110) and in which a groove is formed in a direction orthogonal to the surface of the sample-separating medium and a convexity which is provided to the sample-transporting portion (120) and inserted into the groove, and
    the groove of the guiding portion (117b) has a terminal on which the convexity abuts so as to restrict the movement of the sample-transporting portion (120).

8.  The instrument for electrophoresis according to claim 1,
    wherein an opening portion into which the sample-containing medium (121) can be inserted is formed in the protecting portion (113).

9.  The instrument for electrophoresis according to claim 1,

wherein a medium which has been undergone a first-dimensional electrophoresis of the sample is adhered to the supporting portion (122) as the sample-containing medium (121), and
the sample-separating portion (110) performs a second-dimensional electrophoresis of the sample by using the sample-separating medium (111).

**10.** The electrophoresis apparatus according to claim 1,
wherein elastic modulus of the sample-containing medium (121) is higher than that of the sample-separating medium (111).

**Patentansprüche**

**1.** Instrument zur Elektrophorese, das Folgendes umfasst:

einen Probenabscheidungsabschnitt (110), der Folgendes umfasst:

einen Ladeabschnitt (112), auf den ein Probenabscheidungsmedium (111), das eine Probe abscheidet, geladen wurde,
Seitenwandabschnitte (115), die an einer seitlichen Oberfläche des Ladeabschnitts (112) bereitgestellt sind, und
einen Schutzabschnitt (113), der derart auf dem Probenabscheidungsmedium (111) angeordnet ist, dass ein Abschnitt des Probenabscheidungsmediums (111) freigelegt ist;

einen Probentransportabschnitt (120), der ein die Probe enthaltendes Medium zu dem Probenabscheidungsabschnitt (110) transportiert, umfassend einen Halteabschnitt (122), an dem das die Probe enthaltende Medium (121) haftet; und
einen Positionierungsabschnitt (111b), der an dem Ladeabschnitt (112) dem Schutzabschnitt (113), dem Seitenwandabschnitt und/oder dem Probentransportabschnitt (120) bereitgestellt ist und zum Verbinden des die Probe enthaltenden Mediums (121) mit einer vorbestimmten Stelle des freigelegten Abschnitts des Probenabscheidungsmediums (111) verwendet wird,
**dadurch gekennzeichnet, dass** der Positionierungsabschnitt (111b) dazu konfiguriert ist, die vorbestimmte Stelle derart zu bestimmen, dass einer Beziehung entsprochen wird, wobei die Beziehung $Z \geq 0{,}4 \times X$ lautet, und wobei das X ein erster Abstand, zwischen dem Ende des Schutzabschnitts (113) und dem die Probe enthaltenden Medium (121), ist und das Z ein zweiter Abstand, zwischen der unteren Oberfläche des Schutzabschnitts (113) und der oberen Oberfläche des die Probe enthaltenden Mediums (121), ist.

**2.** Instrument zur Elektrophorese nach Anspruch 1,
wobei der Positionierungsabschnitt mit einer Passkonvexität (125), die an dem Probentransportabschnitt (120) bereitgestellt ist, und einer Passkonkavität, die an dem Schutzabschnitt (113) des Probenabscheidungsabschnitts bereitgestellt ist und in die die Passkonvexität (125) passen kann, gebildet ist.

**3.** Instrument zur Elektrophorese nach Anspruch 1,
wobei der Positionierungsabschnitt mit einer Passkonvexität, die an dem Schutzabschnitt (113) des Probenabscheidungsabschnitts (110) bereitgestellt ist, und einer Passkonkavität, die an dem Probentransportabschnitt (120) bereitgestellt ist und in die die Passkonvexität passen kann, gebildet ist.

**4.** Instrument zur Elektrophorese nach Anspruch 1,
wobei es sich bei dem Positionierungsabschnitt um einen Bewegungseinschränkungsabschnitt (113k) handelt, bei dem es sich um einen Abschnitt des Schutzabschnitts (113) des Probenabscheidungsabschnitts (110) handelt und an dem eine untere Oberfläche des Halteabschnitts des Probentransportabschnitts (120) anstößt.

**5.** Instrument zur Elektrophorese nach Anspruch 1,
wobei es sich bei dem Positionierungsabschnitt um einen Bewegungseinschränkungsabschnitt (113k) handelt, der an dem Seitenwandabschnitt des Probenabscheidungsabschnitts (110) bereitgestellt ist und an dem eine untere Oberfläche des Halteabschnitts des Probentransportabschnitts (120) anstößt.

**6.** Instrument zur Elektrophorese nach Anspruch 5,
wobei ein Führungsabschnitt, der mit einer Nut versehen ist, in die ein Abschnitt des Probentransportabschnitts (120) eingesetzt wird, an dem Bewegungseinschränkungsabschnitt (113k) bereitgestellt ist.

**7.** Instrument zur Elektrophorese nach Anspruch 1,
wobei der Positionierungsabschnitt Folgendes umfasst: einen Führungsabschnitt, der an dem Schutzabschnitt (113) des Probenabscheidungsabschnitts (110) bereitgestellt ist und in dem eine Nut in einer zu der Oberfläche des Probenabscheidungsmediums senkrechten Richtung gebildet ist, und eine Konvexität, die an dem Probentransportabschnitt (120) bereitgestellt ist und in die Nut eingesetzt wird, und
die Nut des Führungsabschnitts (117b) einen Abschluss aufweist, an dem die Konvexität anstößt, um die Bewegung des Probentransportabschnitts (120) einzuschränken.

**8.** Instrument zur Elektrophorese nach Anspruch 1,
wobei ein Öffnungsabschnitt, in den das die Probe enthaltende Medium (121) eingesetzt werden kann, in dem Schutzabschnitt (113) gebildet ist.

**9.** Instrument zur Elektrophorese nach Anspruch 1,
wobei ein Medium, das einer eindimensionalen Elektrophorese der Probe unterzogen wurde, als das die Probe enthaltende Medium (121) an dem Halteabschnitt (122) haftet, und
der Probenabscheidungsabschnitt (110) durch Verwendung des Probenabscheidungsmediums (111) eine zweidimensionale Elektrophorese der Probe ausführt.

**10.** Elektrophoresevorrichtung nach Anspruch 1,
wobei der Elastizitätsmodul des die Probe enthaltenden Mediums (121) höher ist als derjenige des Probenabscheidungsmediums (111).

## Revendications

**1.** Instrument pour électrophorèse comportant :

une partie de séparation d'échantillon (110) comprenant
une partie de chargement (112) sur laquelle un milieu de séparation d'échantillon (111) qui sépare un échantillon a été chargé,
des parties de paroi latérale (115) mises en œuvre au niveau d'une surface latérale de la partie de chargement (112), et
une partie de protection (113) qui est disposée sur le milieu de séparation d'échantillon (111) de telle sorte qu'une partie du milieu de séparation d'échantillon (111) est exposée ;
une partie de transport d'échantillon (120) qui transporte un milieu contenant l'échantillon jusqu'à la partie de séparation d'échantillon (110) comprenant une partie de support (122) à laquelle le milieu contenant l'échantillon (121) qui contient l'échantillon adhère ; et
une partie de positionnement (111b) qui est mise en œuvre au niveau de la partie de chargement (112), la partie de protection (113), la partie de paroi latérale et/ou la partie de transport d'échantillon (120) et qui est utilisée pour connecter le milieu contenant l'échantillon (121) jusque sur une position prédéterminée de la partie exposée du milieu de séparation d'échantillon (111),
**caractérisé en ce que** la partie de positionnement (111b) est configurée pour déterminer la position prédéterminée de telle sorte qu'une relation est satisfaite, la relation étant $Z \geq 0{,}4 \times X$, et
dans lequel X est la première distance entre l'extrémité de la partie de protection (113) et le milieu contenant l'échantillon (121), et Z est la deuxième distance entre la surface inférieure de la partie de protection (113) et la surface supérieure du milieu contenant l'échantillon (121).

**2.** Instrument pour électrophorèse selon la revendication 1,
dans lequel la partie de positionnement est constituée avec une convexité d'ajustement (125) qui est mise en œuvre au niveau de la partie de transport d'échantillon (120) et une concavité d'ajustement qui est mise en œuvre au niveau de la partie de protection (113) de la partie de séparation d'échantillon et dans laquelle la convexité d'ajustement (125) peut s'ajuster.

**3.** Instrument pour électrophorèse selon la revendication 1,
dans lequel la partie de positionnement est constituée avec une convexité d'ajustement qui est mise en œuvre au niveau de la partie de protection (113) de la partie de séparation d'échantillon (110) et une concavité d'ajustement qui est mise en œuvre au niveau de la partie de transport d'échantillon (120) et dans laquelle la convexité d'ajustement peut s'ajuster.

4. Instrument pour électrophorèse selon la revendication 1,
dans lequel la partie de positionnement est une partie de limitation de mouvement (113k) qui est une partie de la partie de protection (113) de la partie de séparation d'échantillon (110) et sur laquelle une surface inférieure de la partie de support de la partie de transport d'échantillon (120) vient prendre appui.

5. Instrument pour électrophorèse selon la revendication 1,
dans lequel la partie de positionnement est une partie de limitation de mouvement (113k) qui est mise en œuvre sur la partie de paroi latérale de la partie de séparation d'échantillon (110) et sur laquelle une surface inférieure de la partie de support de la partie de transport d'échantillon (120) vient prendre appui.

6. Instrument pour électrophorèse selon la revendication 5,
dans lequel une partie de guidage comportant une rainure dans laquelle une partie de la partie de transport d'échantillon (120) est insérée est mise en œuvre au niveau de la partie de limitation de mouvement (113k).

7. Instrument pour électrophorèse selon la revendication 1,
dans lequel la partie de positionnement comprend une partie de guidage qui est mise en œuvre au niveau de la partie de protection (113) de la partie de séparation d'échantillon (110) et dans laquelle une rainure est formée dans une direction orthogonale par rapport à la surface du milieu de séparation d'échantillon et une convexité qui est mise en œuvre au niveau de la partie de transport d'échantillon (120) et insérée dans la rainure, et
la rainure de la partie de guidage (117b) a une borne sur laquelle la convexité vient prendre appui de manière à limiter le mouvement de la partie de transport d'échantillon (120).

8. Instrument pour électrophorèse selon la revendication 1,
dans lequel une partie d'ouverture dans laquelle le milieu contenant l'échantillon (121) peut être inséré est formée dans la partie de protection (113).

9. Instrument pour électrophorèse selon la revendication 1,
dans lequel un milieu qui a subi une électrophorèse de première dimension de l'échantillon est adhéré à la partie de support (122) sous la forme du milieu contenant l'échantillon (121), et
la partie de séparation d'échantillon (110) effectue une électrophorèse de deuxième dimension de l'échantillon en utilisant le milieu de séparation d'échantillon (111).

10. Appareil pour électrophorèse selon la revendication 1,
dans lequel le module d'élasticité du milieu contenant l'échantillon (121) est supérieur à celui du milieu de séparation d'échantillon (111).

# FIG. 1

# FIG. 2

## FIG. 3

## FIG. 4

# FIG. 5

# FIG. 6

# FIG. 7

# FIG. 8

# FIG. 9

# FIG. 10

# FIG. 11

# FIG. 12

## FIG. 13

125
125b
124
121
113e
113
111
112

## FIG. 14

125
125c
124
121
113f
113
111
112

## FIG. 15

## FIG. 16

# FIG. 17

# FIG. 18

FIG. 19

FIG. 20

# FIG. 21

# FIG. 22

# FIG. 23

# FIG. 24

# FIG. 25

FIG. 26

FIG. 27

FIG. 28

FIG. 29

# FIG. 30

## FIG. 31

## FIG. 32

## FIG. 33

## FIG. 34

# FIG. 35

FIG. 36

FIG. 37

FIG. 38

FIG. 39

# FIG. 40

126b

126b

122

# FIG. 41

126c

126c

122

# FIG. 42A

# FIG. 42B

FIG. 43A

FIG. 43B

FIG. 43C

FIG. 43D

FIG. 43E

FIG. 43F

**FIG. 43G**

**FIG. 44A**

**FIG. 44B**

**FIG. 44C**

**FIG. 44D**

**FIG. 44E**

FIG. 44F

FIG. 44G

FIG. 45A

FIG. 45B

FIG. 45C

FIG. 45D

FIG. 45E

FIG. 45F

FIG. 45G

FIG. 46A

FIG. 46B

FIG. 46C

FIG. 46D

# FIG. 47A

# FIG. 47B

# FIG. 47C

# FIG. 47D

# FIG. 47E

# FIG. 48A

# FIG. 48B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO5853745 B
- JP SHO62115161 B
- JP 2007064848 A

- US 5284565 A
- US 2007045118 A